# EUROPÄISCHE PATENTSCHRIFT

(11) **EP 3 791 692 B1**
(45) Veröffentlichungstag und Bekanntmachung des Hinweises auf die Patenterteilung: **03.08.2022**
(21) Anmeldenummer: 19731710.0
(22) Anmeldetag: 17.06.2019
(51) Int. Cl.: H05B 45/385, H02M 3/335

(54) **SYNCHRONE SPERRWANDLERSCHALTUNG ZUM BETRIEB EINER LEUCHTMITTELSTRECKE**
SYNCHRONOUS FLYBACK CONVERTER CIRCUIT FOR OPERATING AN ILLUMINANT LINE
CIRCUIT CONVERTISSEUR À TRANSFERT INDIRECT SYNCHRONE POUR FAIRE FONCTIONNER UNE SECTION DE MOYENS D'ÉCLAIRAGE

(30) Priorität: 21.06.2018 DE 102018114926
(43) Veröffentlichungstag der Anmeldung: 17.03.2021
(73) Patentinhaber: Tridonic GmbH & Co. KG, 6851 Dornbirn (AT)
(72) Erfinder: DE CLERCQ, Ludwig Erasmus, 6850 Dornbirn (AT)
(74) Vertreter: Rupp, Christian
(86) Internationale Anmeldenummer: PCT/EP2019/065846
(87) Internationale Veröffentlichungsnummer: WO 2019/243239

(56) Entgegenhaltungen:
- EP-A1- 3 307 022
- WO-A1-2015/065603
- WO-A1-2018/087302
- US-A1- 2010 110 732
- US-A1- 2014 092 646
- US-A1- 2016 172 962

## Beschreibung

### 1. Gebiet der Erfindung

Die vorliegende Erfindung betrifft eine synchrone Sperrwandlerschaltung zum Betrieb einer Leuchtmittelstrecke mit wenigstens einem Leuchtmittel, insbesondere mit wenigstens einer Leuchtdiode; eine Leuchte aufweisend eine solche erfindungsgemäße synchrone Sperrwandlerschaltung und eine Leuchtmittelstrecke mit wenigstens einem Leuchtmittel, insbesondere mit wenigstens einer Leuchtdiode; sowie ein Verfahren zum Betreiben einer solchen erfindungsgemäßen synchronen Sperrwandlerschaltung.

### 2. Hintergrund

Ein Sperrwandler, auch Hoch-Tiefsetzsteller (englisch *,flyback converter")* genannt, ist ein eingangsseitig aktiv getakteter Gleichspannungswandler bzw. primär getakteter Gleichspannungswandler, der elektrische Energie zwischen einer Eingangsseite bzw. Primärseite und einer Ausgangsseite bzw. Sekundärseite mittels eines Transformators galvanisch entkoppelt bzw. getrennt (also potentialgetrennt) überträgt. Mit einem Sperrwandler kann eine am Eingang zugeführte Gleichspannung in eine Gleichspannung mit einem anderen Spannungsniveau bzw. Spannungslevel umgewandelt werden. Eine Sperrwandlerschaltung zum Betreiben einer Leuchtmittelstrecke mit wenigstens einem Leuchtmittelt umfasst daher einen primärseitigen steuerbaren Schalter und einen Transformator mit einer Primärwicklung, welche mit dem Schalter elektrisch verbunden ist, und mit einer Sekundärwicklung. Der Ausgang der Sperrwandlerschaltung ist über eine Diode mit der Sekundärwicklung elektrisch verbunden, wobei die sekundärseitige Diode der Einweggleichrichtung dient.

Das Dokument US 2014/092646 A1 offenbart eine synchrone Sperrwandlerschaltung zum Betrieb einer Leuchtmittelstrecke gemäß dem Obergriff des unabhängigen Anspruchs 1.

Aus dem Stand der Technik ist es nun bekannt die sekundärseitige Diode durch einen sekundärseitigen steuerbaren Schalter zu ersetzen, wodurch eine höhere Effizienz (geringere elektrische Leistungsverluste) erreicht werden kann. Ein Sperrwandler bzw. eine Sperrwandlerschaltung mit einem sekundärseitigen Schalter anstelle einer Diode zur sekundärseitigen Gleichrichtung wird auch als synchroner Sperrwandler (englisch *"synchronous flyback converter")* bzw. synchrone Sperrwandlerschaltung bezeichnet. Folglich ist in einem synchronen Sperrwandler bzw. in einer synchronen Sperrwandlerschaltung die Sekundärwicklung des Transformators über einen sekundärseitigen Schalter mit dem Ausgang der Sperrwandlerschaltung elektrisch verbunden.

Im Nachfolgenden wird der primärseitige Schalter als erster Schalter und der sekundärseitige Schalter als zweiter Schalter bezeichnet.

Zur Erzeugung eines ausgangsseitigen Stroms für den Betrieb der Leuchtmittelstrecke werden bei einer synchronen Sperrwandlerschaltung der erste Schalter und der zweite Schalter durch eine entsprechende Steuereinheit alternierend im leitenden Zustand betrieben. Insbesondere zum Erreichen eines durch ein Dimmsignal vorgegebenes Dimmlevel bzw. Dimmniveau wird der erste und zweite Schalter gemäß dem Dimmsignal alternierend im leitenden Zustand betrieben.

Wenn während der Einschaltzeitdauer des ersten Schalters der erste Schalter im leitenden Zustand und der zweite Schalter im nicht leitenden Zustand ist, dann fließt auf der Primärseite der synchronen Sperrwandlerschaltung ein Strom durch die Primärwicklung des Transformators und den leitenden ersten Schalter, der durch eine am Eingang zugeführte Versorgungsspannung gespeist wird, und elektrische Energie wird in der Primärwicklung gespeichert. Wenn der erste Schalter nicht leitend geschaltet und der zweite Schalter leitend geschaltet wird, dann wird die in der Primärwicklung gespeicherte elektrische Energie an die Sekundärwicklung des Transformators übertragen. Folglich fließt dann während der Einschaltzeitdauer des zweiten Schalters (erster Schalter nicht leitend und zweiter Schalter leitend) ein Strom auf der Sekundärseite ausgehend von der Sekundärwicklung über den leitenden zweiten Schalter zur am Ausgang angeschlossenen Leuchtmittelstrecke. Dieser Storm entspricht dann folglich dem durch die synchrone Sperrwandlerschaltung ausgangsseitig bereitgestellten Strom für den Betrieb der Leuchtmittelstrecke.

Zum Dimmen der Leuchtmittelstrecke muss der zeitliche Mittelwert des Stroms, der durch die synchrone Sperrwandlerschaltung ausgangsseitig der Leuchtmittelstrecke zugeführt wird, verkleinert werden. Je niedriger bzw. kleiner das Dimmlevel bzw. Dimmniveau desto niedriger bzw. kleiner ist die Helligkeit des durch die Leuchtmittelstrecke abgegebenen Lichts.

Zur Erzielung von sehr niedrigen Dimmlevels, also sehr niedrigen Helligkeiten, muss ein entsprechend sehr klein dimensionierter zeitlicher Mittelwert des der Leuchtmittelstrecke zugeführten Stroms erzielt werden. Da der der Leuchtmittelstrecke zugeführte Strom dem durch die Sekundärwicklung des Transformators der synchronen Sperrwandlerschaltung fließenden Strom entspricht, muss also der zeitliche Mittelwert des durch die Sekundärwicklung fließenden Stroms bzw. des über den Transformator der synchronen Sperrwandlerschaltung ausgangseitig bereitgestellten Stroms entsprechend klein eingestellt werden.

Hierzu kann bei der alternierenden Taktung des ersten und zweiten Schalters die Einschaltzeitdauer des zweiten Schalters derart dimensioniert werden, dass während der Einschaltzeitdauer des zweiten Schalters die Polarität des durch die Sekundärwicklung und zweiten Schalter fließenden Stroms von einer positiven Polarität auf eine negative Polarität wechselt und folglich die Spannung an der Sekundärwicklung umschwingt, d.h. z.B. von einer positiven Polarität auf eine negative Polarität oder in Bezug auf eine andere Referenzspannung, wie beispielsweise eine Busspannung. Dies bedeutet, dass der zweite Schalter so lange im leitenden Zustand betrieben wird, bis sich die Richtung des durch die Sekundärwicklung fließenden Stroms umkehrt. Beim darauffolgenden Einschalten des ersten Schalters weist dann der durch den ersten Schalter fließende Schalterstrom einen negativen Anteil und einen positiven Anteil auf.

Indem der durch die Sekundärwicklung fließende Strom zumindest zeitweise eine negative Polarität aufweist, kann ein besonders kleiner zeitlicher Mittelwert des durch die Sekundärwicklung fließenden Stroms erzielt werden. Dadurch kann die synchrone Sperrwandlerschaltung einen klein dimensionierten Strom für die Leuchtmittelstrecke ausgangseitig ausgeben. Somit können entsprechend niedrige Helligkeiten des von der Leuchtmittelstrecke abgestrahlten Lichts für entsprechende Dimmsignale für die Leuchtmittelstrecke erzielt werden.

Zur Regelung der von einer synchronen Sperrwandlerschaltung am Ausgang bereitgestellten elektrischen Energie oder des am Ausgang bereitgestellten Stroms zum Betreiben einer am Ausgang der synchronen Sperrwandlerschaltung angeschlossenen Leuchtmittelstrecke mit wenigstens einem Leuchtmittel muss typischerweise eine Information bezüglich des zeitlichen Mittelwerts des auf der Sekundärseite durch die am Ausgang angeschlossene Leuchtmittelstrecke fließenden Stroms (Leuchtmittelstrecken-Strom) ermittelt werden und der entsprechenden Steuereinheit zugeführt werden, die zur Taktung des ersten und zweiten Schalters vorgesehen ist.

Eine direkte Messung des Leuchtmittelstrecken-Stroms auf der Sekundärseite ist nachteilig, da das Potential der Sekundärseite und das Potential der Primärseite voneinander galvanisch getrennt sind und folglich eine Rückübertragung des Messergebnisses von der Sekundärseite auf die Primärseite zur Steuereinheit potentialgetrennt erfolgen muss. Dies erfordert zusätzliche Bauelemente, wie z.B. einen Optokoppler, wodurch die synchrone Sperrwandlerschaltung größer wird, d.h. sie beansprucht mehr Platz. Dies ist insbesondere hinsichtlich einer Integration der synchronen Sperrwandlerschaltung nachteilig.

Von Bedeutung ist auch, dass die synchrone Sperrwandlerschaltung aufgrund der zusätzlichen Bauelemente in der Herstellung komplexer und kostenintensiver ist.

Ferner wird bei dem vorstehend beschriebenen Betrieb der synchronen Sperrwandlerschaltung zur Erreichung eines sehr niedrigen Dimmlevels eine sehr aufwendige und kostenintensive Erfassungsschaltung für die Erfassung des zeitlichen Mittelwertes des der Leuchtmittelstrecke durch die synchronen Sperrwandlerschaltung ausgangseitig bereitgestellten Stroms benötigt, da ein sehr niedriges Dimmlevel durch einen sehr kleinen zeitlichen Mittelwert des ausgangsseitig bereitgestellten Stroms erreicht wird. Folglich kann die Erfassung dieses zeitlichen Mittelwerts durch Rauschen leicht verfälscht werden.

Es ist daher eine Aufgabe der vorliegenden Erfindung, eine synchrone Sperrwandlerschaltung zum Betrieb einer Leuchtmittelstrecke mit wenigstens einem Leuchtmittel bereitzustellen, bei der auf platzsparende und kostengünstige Weise eine Information bezüglich des zeitlichen Mittelwerts des sekundärseitigen Stroms erfasst werden kann, der durch die Leuchtmittelstrecke fließt, wenn diese am Ausgang der synchronen Sperrwandlerschaltung angeschlossen ist. Insbesondere ist es eine weitere Aufgabe der vorliegenden Erfindung, dass bei einer solchen synchronen Sperrwandlerschaltung eine weniger komplexe (bspw. platzsparende) und kostengünstige Erfassung auch bei sehr niedrigen Dimmlevels der Leuchtmittelstrecke erfolgen kann.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

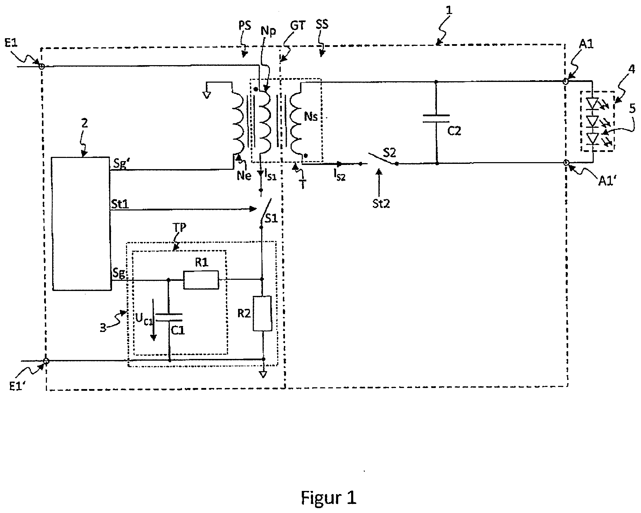

Die nicht erfindungsgemäße synchrone Sperrwandlerschaltungder Figur 1 löst die vorstehende Aufgaben, da durch eine primärseitige Erfassung eines zeitlichen Mittelwerts des durch den ersten Schalter fließenden Schalterstroms und durch eine auf der Basis dieser Erfassung vorgenommene primärseitige separate Ermittlung des zeitlichen Mittelwerts des positiven Anteils des durch den ersten Schalter fließenden Schalterstroms und des zeitlichen Mittelwerts des negativen Anteils des durch den ersten Schalter fließenden Schalterstroms auf platzsparende und kostengünstige Weise eine Information bezüglich des zeitlichen Mittelwerts des auf der Sekundärseite fließenden Stroms und folglich des Leuchtmittelstrecken-Stroms erfasst werden kann, wenn die Leuchtmittelstrecke an der synchronen Sperrwandlerschaltung angeschlossen ist. Denn durch eine Kombination des zeitlichen Mittelwerts des positiven Anteils des Schalterstroms und des zeitlichen Mittelwerts des negativen Anteils des Schalterstroms kann der tatsächliche zeitliche Mittelwert des Schalterstroms ermittelt werden, der einen Rückschluss auf den tatsächlichen zeitlichen Mittelwert des sekundärseitigen Stroms erlaubt.

Das Gleiche gilt für das entsprechende nicht erfindungsgemäße Verfahren.

Die synchrone Sperrwandlerschaltung des unabhängigen Anspruchs 1 löst die vorstehende Aufgabe, da durch eine primärseitige separate Erfassung des zeitlichen Mittelwerts des positiven Anteils des durch den ersten Schalter fließenden Schalterstroms und des zeitlichen Mittelwerts des negativen Anteils des durch den ersten Schalter fließenden Schalterstroms auf platzsparende und kostengünstige Weise eine Information bezüglich des zeitlichen Mittelwerts des auf der Sekundärseite fließenden Stroms und folglich des Leuchtmittelstrecken-Stroms erfasst werden kann, wenn die Leuchtmittelstrecke an der synchronen Sperrwandlerschaltung angeschlossen ist. Denn durch eine Kombination des zeitlichen Mittelwerts des positiven Anteils des Schalterstroms und des zeitlichen Mittelwerts des negativen Anteils des Schalterstroms kann der tatsächliche zeitliche Mittelwert des Schalterstroms ermittelt werden, der einen Rückschluss auf den tatsächlichen zeitlichen Mittelwert des sekundärseitigen Stroms erlaubt.

Das Gleiche gilt für das entsprechende erfindungsgemäße Verfahren gemäß dem unabhängigen Anspruch 10.

### 3. Ausführliche Beschreibung der Erfindung

Gemäß einem nicht erfindungsgemäßen Beispiel wird eine synchrone Sperrwandlerschaltung zum Betrieb einer Leuchtmittelstrecke mit wenigstens einem Leuchtmittel, insbesondere mit wenigstens einer Leuchtdiode, bereitgestellt; wobei die synchrone Sperrwandlerschaltung umfasst:
- einen Transformator mit einer Primärwicklung, welche mit einem ersten Schalter elektrisch verbunden ist, und einer Sekundärwicklung, welche über einen zweiten Schalter mit einem Ausgang der synchronen Sperrwandlerschaltung elektrisch verbunden ist, wobei die Leuchtmittelstrecke an dem Ausgang anschließbar ist,
- eine Steuereinheit, die zum Ansteuern des ersten Schalters und zweiten Schalters eingerichtet ist, und
- eine Erfassungsschaltung, die zum Erfassen eines zeitlichen Mittelwerts des durch den ersten Schalter fließenden Schalterstroms und zum Zuführen wenigstens eines diesen zeitlichen Mittelwert wiedergebenden Signals an die Steuereinheit eingerichtet ist;
- wobei der Transformator eine Primärseite der synchronen Sperrwandlerschaltung, auf der die Primärwicklung, der erste Schalter, die Steuereinheit und die Erfassungsschaltung angeordnet sind, von einer Sekundärseite der synchronen Sperrwandlerschaltung galvanisch trennt, auf der die Sekundärwicklung, der zweite Schalter und der Ausgang angeordnet sind; und
- wobei die Steuereinheit dazu eingerichtet ist, auf der Basis des ausgehend von der Erfassungsschaltung zugeführten Signals einen zeitlichen Mittelwert des positiven Anteils des durch den ersten Schalter fließenden Schalterstroms und einen zeitlichen Mittelwert des negativen Anteils des durch den ersten Schalter fließenden Schalterstroms separat zu ermitteln.

Mit anderen Worten wird bei einer nicht erfindungsgemäßen synchronen Sperrwandlerschaltung vorgeschlagen, einen zeitlichen Mittelwert des durch den ersten Schalter fließenden Schalterstroms zu erfassen und ein diesen zeitlichen Mittelwert wiedergebendes Signal an die Steuereinheit zuzuführen, die dann auf der Basis des zugeführten Signals einen zeitlichen Mittelwert des positive Anteils des Schalterstroms und einen zeitlichen Mittelwert des negativen Anteils des Schalterstroms separat ermitteln kann.

Folglich ist die nicht erfindungsgemäße synchrone Sperrwandlerschaltung vorteilhaft, da durch eine primärseitige Erfassung und Auswertung des zeitlichen Mittelwerts des durch den ersten Schalter fließenden Schalterstroms eine Information bezüglich des auf der Sekundärseite fließenden Durchschnittsstroms erfasst werden kann, ohne dass hierfür eine potentialgetrennte Rückübertragung von der Sekundärseite auf die Primärseite notwendig ist.

Ferner kann auch bei einem sehr niedrigen Dimmlevel der tatsächliche zeitliche Mittelwert des durch den ersten Schalter fließenden Schalterstroms kostengünstig erfasst werden, indem der ermittelte zeitliche Mittelwert des positiven Anteils des Schalterstroms und der ermittelte zeitliche Mittelwert des negativen Anteils des Schalterstroms miteinander kombiniert werden. Bei einem sehr niedrigen Dimmlevel sind nämlich der zeitliche Mittelwert des positiven Anteils des Schalterstroms und der zeitliche Mittelwert des negativen Anteils des Schalterstroms sehr viel größer als der zeitliche Mittelwert des gesamten Schalterstroms, sodass ein den zeitlichen Mittelwert des positiven Anteils des Schalterstroms wiedergebendes Signal und ein den zeitlichen Mittelwert des negativen Anteils des Schalterstroms wiedergebendes Signal ein sehr viel besseres Signal-Rausch-Verhältnis (SNR) im Vergleich zu dem durch die Erfassungsschaltung erfassten Signal hat, das den zeitlichen Mittelwert des gesamten Schalterstroms wiedergibt. Daher kann sich der durch die Erfassungsschaltung erfasste zeitliche Mittelwert des Schalterstroms (insbesondere bei einem sehr kleinen Dimmlevel und folglich einem sehr kleinen zeitlichen Mittelwert des Schalterstroms) aufgrund von Rauschen, das bei einer kostengünstigen Erfassung vorhanden sein kann, von dem tatsächlichen zeitlichen Mittelwert des Schalterstroms unterscheiden.

Der tatsächliche zeitliche Mittelwert des Schalterstroms kann aber auf der Basis des separat ermittelten zeitlichen Mittelwertes des positiven Anteils des Schalterstroms und zeitlichen Mittelwertes des negativen Anteils des Schalterstroms ermittelt, insbesondere bestimmt, werden, da diese zwei separat ermittelten zeitlichen Mittelwerte durch ein Rauschen, das bei einer kostengünstigen Erfassung vorhanden sein kann, nicht verfälscht werden.

Unter einer separaten Ermittlung des zeitlichen Mittelwertes des positiven Anteils und des zeitlichen Mittelwertes des negativen Anteils des durch den ersten Schalter fließenden Schalterstroms versteht man, dass der zeitliche Mittelwert des positiven Anteils bzw. positiven Beitrags des Schalterstroms unabhängig von dem zeitliche Mittelwert des negativen Anteils bzw. negativen Beitrags des Schalterstroms, und dass entsprechend der zeitliche Mittelwert des negativen Anteils des Schalterstroms unabhängig von dem zeitlichen Mittelwert des positiven Anteils des Schalterstroms ermittelt werden kann.

Unter dem durch den ersten Schalter fließenden Schalterstrom versteht man den Strom, der durch den ersten Schalter fließt, wenn dieser sich im leitenden Zustand befindet bzw. eingeschaltet ist. Da der erste Schalter mit der Primärwicklung elektrisch verbunden ist, entspricht der im leitenden Zustand des ersten Schalters durch die Primärwicklung fließende Strom dem Schalterstrom.

Der positive Anteil des Schalterstroms entspricht vorzugsweise einem positiven Strom, der durch den ersten Schalter im leitenden Zustand fließt; und der negative Anteil des Schalterstromstroms entspricht vorzugsweise einem negativen Strom, der durch den ersten Schalter im leitenden Zustand fließt.

Der negative Anteil des Schalterstroms entspricht hinsichtlich des positiven Anteils insbesondere einem Stromrückfluss durch den ersten Schalter.

Der positive Anteil des Schalterstroms entspricht vorzugsweise einem Strom, der von dem betragsmäßig potentialhöheren Eingangsanschluss der synchronen Sperrwandlerschaltung durch die Primärwicklung des Transformators und den ersten Schalter im leitenden Zustand zu dem betragsmäßig potentialniedrigeren Eingangsanschluss fließt. Der negative Anteil des Schalterstroms entspricht vorzugsweise einem Strom, der von dem betragsmäßig potentialniedrigeren Eingangsanschluss der synchronen Sperrwandlerschaltung durch den ersten Schalter im leitenden Zustand und die Primärwicklung des Transformators zu dem betragsmäßig potentialhöheren Eingangsanschluss fließt.

Wie bereits vorstehende ausgeführt, trennt bzw. entkoppelt der Transformator eine Primärseite der synchronen Sperrwandlerschaltung von einer Sekundärseite der synchronen Sperrwandlerschaltung, sodass eine galvanische Trennung zwischen dem Eingang und dem Ausgang der synchronen Sperrwandlerschaltung besteht. Die synchrone Sperrwandlerschaltung ist also dazu eingerichtet, elektrische Energie zwischen ihrer Primärseite (kann auch als Eingangsseite bezeichnet werden) und ihrer Sekundärseite (kann auch als Ausgangsseite bezeichnet werden) mittels des Transformators potentialgetrennt zu übertragen.

Wie bereits vorstehend ausgeführt, wird unter einer *"synchronen Sperrwandlerschaltung"* insbesondere eine "normale" Sperrwanderschaltung verstanden, bei der die zur Gleichrichtung dienende wenigstens eine sekundärseitige Diode durch wenigstens einen steuerbaren sekundärseitigen Schalter ersetzt ist.

Die Steuereinheit ist vorzugsweise dazu eingerichtet den erste Schalter und den zweite Schalter alternierend anzusteuern bzw. zu takten. Mit anderen Worten, wenn der erste Schalter leitend geschaltet ist, dann ist vorzugsweise der zweite Schalter nicht leitend geschaltet; und wenn der erste Schalter nicht leitend geschaltet ist, dann ist vorzugsweise der zweite Schalter leitend geschaltet.

Zur Erzeugung eines ausgangsseitigen Stroms für den Betrieb der Leuchtmittelstrecke ist die Steuereinheit der erfindungsgemäßen synchronen Sperrwandlerschaltung also vorzugsweise dazu eingerichtet, den erste Schalter und zweite Schalter alternierend im leitenden Zustand zu betreiben. Insbesondere ist die Steuereinheit dazu eingerichtet, den ersten Schalter und zweiten Schalter alternierend und periodisch im leitenden Zustand zu betreiben.

Zum Erreichen eines durch ein Dimmsignal vorgegebenes Dimmlevel bzw. Dimmniveau ist die Steuereinheit vorzugsweise dazu eingerichtet, den ersten und zweiten Schalter gemäß dem Dimmsignal alternierend im leitenden Zustand zu betreiben. Zum Erreichen eines durch ein Dimmsignal vorgegebenes Dimmlevel bzw. Dimmniveau ist die Steuereinheit insbesondere dazu eingerichtet, den ersten und zweiten Schalter gemäß dem Dimmsignal alternierend und periodisch im leitenden Zustand zu betreiben.

Wenn während der Einschaltzeitdauer des ersten Schalters der erste Schalter im leitenden Zustand bzw. leitend und der zweite Schalter im nicht leitenden Zustand bzw. nicht leitend ist, dann fließt auf der Primärseite der synchronen Sperrwandlerschaltung ein Strom durch die Primärwicklung des Transformators und den leitenden ersten Schalter, der durch eine am Eingang zugeführte Versorgungsspannung gespeist wird, und elektrische Energie wird in der Primärwicklung gespeichert. Wenn der erste Schalter nicht leitend geschaltet und der zweite Schalter leitend geschaltet wird, dann wird die in der Primärwicklung gespeicherte elektrische Energie an die Sekundärwicklung des Transformators übertragen. Folglich fließt dann während der Einschaltzeitdauer des zweiten Schalters (erster Schalter nicht leitend und zweiter Schalter leitend) ein Strom auf der Sekundärseite ausgehend von der Sekundärwicklung über den leitenden zweiten Schalter zur am Ausgang angeschlossenen Leuchtmittelstrecke. Dieser Storm entspricht dann folglich dem durch die synchrone Sperrwandlerschaltung ausgangsseitig bereitgestellten Strom für den Betrieb der Leuchtmittelstrecke.

Zum Dimmen der Leuchtmittelstrecke muss der zeitliche Mittelwert des Stroms, der durch die synchrone Sperrwandlerschaltung ausgangsseitig der Leuchtmittelstrecke bereitgestellt wird, verkleinert werden. Je niedriger bzw. kleiner das Dimmlevel bzw. Dimmniveau desto niedriger bzw. kleiner ist die Helligkeit des durch die Leuchtmittelstrecke abgegebenen Lichts.

Zur Erzielung von sehr niedrigen Dimmlevels, also sehr niedrigen Helligkeiten, muss ein entsprechend sehr klein dimensionierter zeitlicher Mittelwert des der Leuchtmittelstrecke ausgangsseitig bereitgestellten Stroms erzielt werden. Da der der Leuchtmittelstrecke ausgangsseitig bereitgestellte Strom dem durch die Sekundärwicklung des Transformators der synchronen Sperrwandlerschaltung fließenden Strom entspricht, muss also der zeitliche Mittelwert des durch die Sekundärwicklung fließenden Stroms bzw. des über den Transformator der synchronen Sperrwandlerschaltung ausgangseitig bereitgestellten Stroms entsprechend klein eingestellt werden.

Hierzu kann die Steuereinheit dazu eingerichtet sein, die Einschaltzeitdauer des zweiten Schalters derart zu steuern, dass die Polarität des durch die Sekundärwicklung und zweiten Schalter fließenden Stroms von einer positiven Polarität auf eine negative Polarität wechselt und folglich die Spannung an der Sekundärwicklung umschwingt, d.h. z.B. von einer positiven Polarität auf eine negative Polarität oder in Bezug auf eine andere Referenzspannung, wie beispielsweise eine Busspannung. Dies bedeutet, dass die Steuereinheit vorzugsweise dazu eingerichtet ist, den zweiten Schalter so lange im leitenden Zustand zu betreiben, bis sich die Richtung des durch die Sekundärwicklung fließenden Stroms umkehrt. Beim darauffolgenden Einschalten des ersten Schalters weist dann der durch den ersten Schalter fließende Schalterstrom einen negativen Anteil und einen positiven Anteil auf.

Ein Betrieb der synchronen Sperrwandlerschaltung, insbesondere des ersten Schalters und zweiten Schalters, durch die Steuereinheit, bei dem während der alternierenden, insbesondere alternierenden und periodischen, Ansteuerung des ersten Schalters und zweiten Schalters die Einschaltzeitdauer des zweiten Schalters derart gewählt ist, dass die Polarität des durch die Sekundärwicklung und zweiten Schalter fließenden Stroms von einer positiven Polarität auf eine negative Polarität wechselt, kann auch als synchrone Betriebsart bzw. synchroner Betriebsmodus bezeichnet werden.

Indem der durch die Sekundärwicklung fließende Strom zumindest zeitweise eine negative Polarität aufweist, kann ein besonders kleiner zeitlicher Mittelwert des durch die Sekundärwicklung fließenden Stroms erzielt werden. Dadurch kann die erfindungsgemäße synchrone Sperrwandlerschaltung einen klein dimensionierter Strom für die Leuchtmittelstrecke ausgangseitig ausgeben und somit können entsprechend geringe Helligkeiten des von der Leuchtmittelstrecke abgestrahlten Lichts für entsprechende Dimmsignale für die Leuchtmittelstrecke erzielt werden.

Der erste Schalter und der zweite Schalter sind vorzugsweise ein Leistungsschalter, ein Feldeffekttransistor, wie z.B. ein Metall-Oxid-Halbleiter-Feldeffekttransistor (MOSFET), oder ein Bipolartransistor. Es können auch andere Schaltertypen, insbesondere Transistortypen, für den ersten und zweiten Schalter verwendet werden. Der erste und zweite Schalter sind vorzugsweise vom gleichen Schaltertyp, insbesondere Transistortyp, bspw. Sind beide FET (MOSFET) oder Bipolar-Transistoren.

Die Steuereinheit ist vorzugsweise dazu eingerichtet, den erste Schalter und zweiten Schalter hochfrequent, insbesondere mit einer Frequenz größer gleich 80 kHz, insbesondere größer gleich 100 kHz, ganz insbesondere größer gleich 150 kHZ anzusteuern bzw. zu takten.

Die Steuereinheit ist vorzugsweise durch die alternierende, insbesondere alternierende und periodische, Taktung des ersten Schalters und zweiten Schalters, d.h. durch alternierendes, insbesondere alternierendes und periodisches, Ein- und Ausschalten des ersten und zweiten Schalters, und dem dadurch verursachten Laden und Entladen des Transformators dazu eingerichtet, ausgehend von einer am Eingang der synchronen Sperrwandlerschaltung anschließbaren elektrischen Energiequelle eine am Ausgang der synchronen Sperrwandlerschaltung bereitgestellte elektrische Energie, Strom und/oder Spannung einzustellen.

Die Steuereinheit ist vorzugsweise dazu eingerichtet, auf der Basis des separat ermittelten zeitlichen Mittelwerts des positiven Anteils des Schalterstrom und zeitlichen Mittelwerts des negativen Anteils des Schalterstroms den ersten Schalter und zweiten Schalter alternierend, insbesondere alternierend und periodisch, anzusteuern. Insbesondere ist die Steuereinheit vorzugsweise dazu eingerichtet, auf der Basis der Kombination des zeitlichen Mittelwerts des positiven Anteils des Schalterstroms und des zeitlichen Mittelwerts des negativen Anteils des Schalterstroms den ersten Schalter und zweiten Schalter alternierend, insbesondere alternierend und periodisch, anzusteuern.

Die Steuereinheit kann eine integrierte Halbleiterschaltung sein oder eine integrierte Halbleiterschaltung umfassen. Die Steuereinheit ist vorzugsweise ein FPGA, Prozessor, ein Mikroprozessor, ein Controller, ein Mikrocontroller oder eine anwendungsspezifische integriert Schaltung (ASIC) oder eine Kombination aus diesen genannten Elementen.

Die synchrone Sperrwandlerschaltung kann eingangsseitig an eine elektrische Energiequelle angeschlossen werden, die der synchronen Sperrwandlerschaltung dann eine Gleichspannung oder eine gleichgerichtete Wechselspannung, welche vorzugsweise geglättet bzw. gesiebt wurde, eingangsseitig bereitstellt.

Die Leuchtmittelstrecke umfasst vorzugsweise ein oder mehrere Leuchtmittel. Die Leuchtmittel sind vorzugsweise in Reihe und/oder parallel miteinander elektrisch verbunden, falls mehr als ein Leuchtmittel in der Leuchtmittelstrecke angeordnet ist.

Als Leuchtmittel können alle dem Fachmann bekannten Leuchtmittel verwendet werden, deren Lichtemission durch die dem Leuchtmittel zugeführte elektrische Energie steuerbar ist. Vorzugsweise entspricht das wenigstens eine Leuchtmittel der Leuchtmittelstrecke einer Leuchtdiode (LED). Die Leuchtmittelstrecke kann jede Art von Leuchtdiode umfassen, wie z.B. eine organische Leuchtdiode, eine anorganische Leuchtdiode, eine Leuchtdiode mit Sekundäranregung usw. Vorzugsweise umfasst die Leuchtmittelstrecke unterschiedliche Arten von Leuchtmitteln oder nur eine Art von Leuchtmitteln. Die vorliegende Erfindung ist nicht auf ein bestimmtes Leuchtmittel beschränkt.

Vorzugsweise ist die Steuereinheit dazu eingerichtet, auf der Basis des ausgehend von der Erfassungsschaltung zugeführten Signals und des Zeitpunktes des Nulldurchgangs des Schalterstroms den zeitlichen Mittelwert des positiven Anteils des Schalterstroms und den zeitlichen Mittelwert des negativen Anteils des Schalterstroms separat zu ermitteln.

Insbesondere ist die Steuereinheit dazu eingerichtet, nach dem Einschalten bzw. leitend Schalten des ersten Schalters den zeitlichen Verlauf des zugeführten Signals bis zum Zeitpunkt des Nulldurchgangs des Schalterstroms als den zeitlichen Mittelwert des negativen Anteils des Schalterstroms und den zeitlichen Verlauf des zugeführten Signals ab dem Zeitpunkt des Nulldurchgangs des Schalterstroms als den zeitlichen Mittelwert des positiven Anteils des Schalterstroms zu ermitteln, insbesondere auszuwerten.

Die Steuereinheit kann auch das von der Erfassungsschaltung zugeführte Signal analog oder digital verarbeiten.

Die Erfassungsschaltung weist vorzugsweise einen Kondensator auf, der mit dem ersten Schalter derart elektrisch verbunden ist, dass er von dem durch den ersten Schalter fließenden Schalterstrom geladen wird, und das Signal eine von dem Kondensator abgegebene Spannung ist.

Mit anderen Worten umfasst die Erfassungsschaltung vorzugsweise einen Kondensator zur Bildung des zeitlichen Mittelwerts des durch den ersten Schalter fließenden Schalterstroms.

Vorzugsweise ist der Kondensator ein Bestandteil eines Tiefpassfilters.

Zusätzlich kann ein Faktor, der die bei der Signalerzeugung entstehenden Abweichungen des Signals von dem tatsächlich durch die Primärwicklung und den ersten Schalter fließenden mittleren Strom wiedergibt bzw. ausgleicht, berechnet oder experimentell ermittelt werden. Die Steuereinheit kann dazu eingerichtet sein, den Strom aus der von dem Kondensator abgegebenen Spannung mittels diesem vorgegebenen, die Relation zwischen dem durch den ersten Schalter fließenden Strom und der von dem Kondensator abgegebenen Spannung anzeigenden Faktor zu ermitteln.

Vorzugsweise ist die Steuereinheit dazu eingerichtet, den ersten Schalter und zweiten Schalter derart alternierend einzuschalten, dass während der Einschaltzeitdauer des zweiten Schalters die Polarität des durch den zweiten Schalter fließenden Stroms von einer positiven Polarität auf eine negative Polarität wechselt, sodass während der nachfolgenden Einschaltzeitdauer des ersten Schalters der durch den ersten Schalter fließende Schalterstrom einen negativen Anteil und einen positiven Anteil aufweist.

Das heißt, bei der alternierenden Ansteuerung des ersten Schalters und zweiten Schalters durch die Steuereinheit kann die Einschaltzeitdauer des zweiten Schalters derart gewählt sein, dass während der Einschaltzeitdauer des zweiten Schalters die Polarität des durch den zweiten Schalter fließenden Stroms von einer positiven Polarität auf eine negative Polarität wechselt, sodass während der nachfolgenden Einschaltzeitdauer des ersten Schalters der durch den ersten Schalter fließende Schalterstrom einen negativen Anteil und einen positiven Anteil aufweist.

Insbesondere ist die Steuereinheit dazu eingerichtet, den ersten Schalter und zweiten Schalter derart alternierend und periodisch einzuschalten, dass während der Einschaltzeitdauer des zweiten Schalters die Polarität des durch den zweiten Schalter fließenden Stroms von einer positiven Polarität auf eine negative Polarität wechselt, sodass während der nachfolgenden Einschaltzeitdauer des ersten Schalters der durch den ersten Schalter fließende Schalterstrom einen negativen Anteil und einen positiven Anteil aufweist.

Ferner ist die Steuereinheit vorzugsweise dazu eingerichtet, den tatsächlichen zeitlichen Mittelwert des Schalterstroms durch eine Kombination des zeitlichen Mittelwertes des positiven Anteils des Schalterstroms mit dem zeitlichen Mittelwert des negativen Anteils des Schalterstroms zu ermitteln.

Der durch die Erfassungsschaltung erfasste zeitliche Mittelwert des Schalterstroms kann sich, insbesondere bei einem sehr geringen Dimmlevel und folglich sehr kleinen zeitlichen Mittelwert des Schalterstroms, von dem tatsächlichen zeitlichen Mittelwert aufgrund eines Rauschens, das bei der Erfassung auftreten kann, unterscheiden. Dies ist nicht der Fall, wenn die Steuereinheit den zeitlichen Mittelwert des Schalterstroms durch eine Kombination des zeitlichen Mittelwertes des positiven Anteils des Schalterstroms mit dem zeitlichen Mittelwert des negativen Anteils des Schalterstroms ermittelt. Folglich entspricht der durch die Steuereinheit ermittelte zeitliche Mittelwert des Schalterstroms dem tatsächlichen zeitlichen Mittelwert des Schalterstroms und wird daher auch als solcher bezeichnet.

Der zeitliche Mittelwert des positiven Anteils des Schalterstroms entspricht insbesondere dem positiven Durchschnittsstrom, der während der Einschaltzeitdauer des ersten Schalters durch den ersten Schalter fließt. Der zeitliche Mittelwert des negativen Anteils des Schalterstroms entspricht insbesondere dem negativen Durchschnittsstrom, der während der Einschaltzeitdauer des ersten Schalters durch den ersten Schalter fließt. Der tatsächliche zeitliche Mittelwert des Schalterstroms entspricht insbesondere dem Durchschnittsstrom, der während der Einschaltzeitdauer des ersten Schalters tatsächlich durch den ersten Schalter fließt.

Die Steuereinheit ist vorzugsweise dazu eingerichtet, auf der Basis des ermittelten tatsächlichen zeitlichen Mittelwerts des Schalterstroms, insbesondere auf der Basis der Kombination des zeitlichen Mittelwerts des positiven Anteils des Schalterstroms und des zeitlichen Mittelwerts des negativen Anteils des Schalterstroms, den ersten Schalter und zweiten Schalter alternierend, insbesondere alternierend und periodisch, anzusteuern.

Die Steuereinheit ist insbesondere dazu eingerichtet, den Zeitpunkt des Aus- und/oder Einschaltens des ersten Schalters auf Grundlage des ermittelten tatsächlichen zeitlichen Mittelwerts des Schalterstroms, insbesondere auf der Grundlage des durch die Erfassungsschaltung an die Steuereinheit zugeführten Signals und dem daraus ermittelten zeitlichen Mittelwert des positiven Anteils des Schalterstroms und zeitlichen Mittelwert des negativen Anteils des Schalterstroms, einzustellen. Mit dem Setzen des Ausschaltzeitpunkts und des Einschaltzeitpunkts des ersten Schalters wird die Einschaltzeitdauer bzw. die Ausschaltzeitdauer des ersten Schalters eingestellt.

Der Ausschaltzeitpunkt des ersten Schalters kann auch mittelbar durch Einstellen einer Einschaltzeitdauer relativ zum Einschaltzeitpunkt des ersten Schalters festgelegt werden.

Bei einer alternierenden Ansteuerung des ersten und zweiten Schalters ergibt sich dann über den Zeitpunkt des Aus- und/oder Einschaltens des ersten Schalters der Zeitpunkt des Ein- und/oder Ausschaltens des zweiten Schalters.

Alternativ oder zusätzlich kann die Steuereinheit dazu eingerichtet sein, den Zeitpunkt des Aus- und/oder Einschaltens des zweiten Schalters auf Grundlage des ermittelten tatsächlichen zeitlichen Mittelwerts des Schalterstroms, insbesondere auf der Grundlage des durch die Erfassungsschaltung an die Steuereinheit zugeführten Signals und dem daraus ermittelten zeitlichen Mittelwert des positiven Anteils des Schalterstroms und zeitlichen Mittelwert des negativen Anteils des Schalterstroms, einzustellen.

Für eine Regelung der von der synchronen Sperrwandlerschaltung ausgangsseitig bereitgestellten elektrischen Energie bzw. des von der synchronen Sperrwandlerschaltung ausgangsseitig bereitgestellten Stroms zum Betrieb der ausgangsseitig anschließbaren Leuchtmittelstrecke kann die Steuereinheit dazu eingerichtet sein, den Zeitpunkt des Aus- und/oder Einschaltens des ersten Schalters und/oder den Zeitpunkt des Aus- und/oder Einschaltens des zweiten Schalters auf Grundlage einer Abweichung des ermittelten tatsächlichen zeitlichen Mittelwerts des durch den ersten Schalter fließenden Schalterstroms von einem vorgegebenen Wert einzustellen.

Die Steuereinheit ist also vorzugsweise dazu eingerichtet, den Zeitpunkt des Aus- und/oder Einschaltens des ersten Schalters und/oder den Zeitpunkt des Aus- und/oder Einschaltens des zweiten Schalters auf Grundlage einer Abweichung der Kombination aus dem ermittelten zeitlichen Mittelwert des positiven Anteils des Schalterstroms und dem ermittelten zeitlichen Mittelwert des negativen Anteils des Schalterstroms von einem vorgegebenen Wert einzustellen.

Je nach Höhe der bestimmten Abweichung kann der Zeitpunkt des Ausschaltens des ersten Schalters mehr oder weniger verzögert bzw. der Zeitpunkt des Einschaltens des ersten Schalters vorgezogen werden, um beispielsweise eine zu niedrige ausgangsseitig bereitgestellte elektrische Energie bzw. einen zu niedrigen bereitgestellten Strom zu korrigieren.

Um das Beispiel der nicht erfindungsgemäßen synchronen Sperrwandlerschaltung zu erreichen können die vorstehenden optionalen Merkmale beliebig kombiniert werden.

Gemäß einer Ausführungsform der vorliegenden Erfindung wird eine synchrone Sperrwandlerschaltung zum Betrieb einer Leuchtmittelstrecke mit wenigstens einem Leuchtmittel, insbesondere mit wenigstens einer Leuchtdiode, bereitgestellt; wobei die synchrone Sperrwandlerschaltung umfasst:
- einen Transformator mit einer Primärwicklung, welche mit einem ersten Schalter elektrisch verbunden ist, und einer Sekundärwicklung, welche über einen zweiten Schalter mit einem Ausgang der synchronen Sperrwandlerschaltung elektrisch verbunden ist, wobei die Leuchtmittelstrecke an dem Ausgang anschließbar ist,
- eine Steuereinheit, die zum Ansteuern des ersten Schalters und zweiten Schalters eingerichtet ist, und
- eine Erfassungsschaltung;
- wobei der Transformator eine Primärseite der synchronen Sperrwandlerschaltung, auf der die Primärwicklung, der erste Schalter, die Steuereinheit und die Erfassungsschaltung angeordnet sind, von einer

Sekundärseite der synchronen Sperrwandlerschaltung galvanisch trennt, auf der die Sekundärwicklung, der zweite Schalter und der Ausgang angeordnet sind; und
- wobei die Erfassungsschaltung dazu eingerichtet ist, einen zeitlichen Mittelwert des positiven Anteils des durch den ersten Schalter fließenden Schalterstroms und einen zeitlichen Mittelwert des negativen Anteils des durch den ersten Schalter fließenden Schalterstroms separat zu erfassen; und ein den zeitlichen Mittelwert des negativen Anteils des Schalterstroms wiedergebendes erstes Signal und ein den zeitlichen Mittelwert des positiven Anteils des Schalterstroms wiedergebendes zweites Signal an die Steuereinheit zuzuführen.

Mit anderen Worten schlägt die vorliegende Erfindung vor, bei der Ausführungsform der erfindungsgemäßen synchronen Sperrwandlerschaltung einen zeitlichen Mittelwert des positive Anteils des Schalterstroms und einen zeitlichen Mittelwert des negativen Anteils des Schalterstroms separat zu erfassen und diese separat erfassten zeitlichen Mittelwerte als zwei separate Signale an die Steuereinheit zuzuführen.

Folglich ist diese Ausführungsform der erfindungsgemäßen synchronen Sperrwandlerschaltung vorteilhaft, da durch eine primärseitige separate Erfassung des zeitlichen Mittelwertes des positiven Anteils des durch den ersten Schalter fließenden Schalterstroms und des zeitlichen Mittelwertes des negativen Anteils des Schalterstroms eine Information bezüglich des auf der Sekundärseite fließenden Durchschnittsstroms erfasst werden kann, ohne dass hierfür eine potentialgetrennte Rückübertragung von der Sekundärseite auf die Primärseite notwendig ist.

Ferner kann auch bei einem sehr niedrigen Dimmlevel der tatsächliche zeitliche Mittelwert des durch den ersten Schalter fließenden Schalterstroms kostengünstig erfasst werden, indem der erfasste zeitliche Mittelwert des positiven Anteils des Schalterstroms und der erfasste zeitliche Mittelwert des negativen Anteils des Schalterstroms miteinander kombiniert werden. Bei einem sehr niedrigen Dimmlevel sind nämlich der zeitliche Mittelwert des positiven Anteils des Schalterstroms und der zeitliche Mittelwert des negativen Anteils des Schalterstroms sehr viel größer als der zeitliche Mittelwert des gesamten Schalterstroms, sodass das den zeitlichen Mittelwert des positiven Anteils des Schalterstroms wiedergebende Signal und das den zeitlichen Mittelwert des negativen Anteils des Schalterstroms wiedergebende Signal ein gutes Signal-Rausch-Verhältnis (SNR) aufweisen und folglich durch ein Rauschen, das bei einer kostengünstigen Erfassung vorhanden sein kann, nicht verfälscht werden.

Der tatsächliche zeitliche Mittelwert des Schalterstroms kann daher auf der Basis des separat erfassten zeitlichen Mittelwertes des positiven Anteils des Schalterstroms und zeitlichen Mittelwertes des negativen Anteils des Schalterstroms ermittelt, insbesondere bestimmt, werden, da diese zwei separat erfassten zeitlichen Mittelwerte durch ein Rauschen, das bei einer kostengünstigen Erfassung vorhanden sein kann, nicht verfälscht werden.

Die Steuereinheit ist vorzugsweise dazu eingerichtet, das erste und zweite Signal auszuwerten, um den zeitlichen Mittelwert des positiven Anteils des Schalterstroms und den zeitlichen Mittelwert des negativen Anteils des Schalterstroms zu erhalten.

Unter einer separaten Erfassung des zeitlichen Mittelwertes des positiven Anteils und des zeitlichen Mittelwertes des negativen Anteils des durch den ersten Schalter fließenden Schalterstroms versteht man, dass der zeitliche Mittelwert des positiven Anteils bzw. positiven Beitrags des Schalterstroms unabhängig von dem zeitliche Mittelwert des negativen Anteils bzw. negativen Beitrags des Schalterstroms, und dass entsprechend der zeitliche Mittelwert des negativen Anteils des Schalterstroms unabhängig von dem zeitlichen Mittelwert des positiven Anteils des Schalterstroms erfasst werden kann.

Unter dem durch den ersten Schalter fließenden Schalterstrom versteht man den Strom, der durch den ersten Schalter fließt, wenn dieser sich im leitenden Zustand befindet bzw. eingeschaltet ist. Da der erste Schalter mit der Primärwicklung elektrisch verbunden ist, entspricht der im leitenden Zustand des ersten Schalters durch die Primärwicklung fließende Strom dem Schalterstrom.

Der positive Anteil des Schalterstroms entspricht vorzugsweise einem positiven Strom, der durch den ersten Schalter im leitenden Zustand fließt; und der negative Anteil des Schalterstromstroms entspricht vorzugsweise einem negativen Strom, der durch den ersten Schalter im leitenden Zustand fließt.

Der negative Anteil des Schalterstroms entspricht hinsichtlich des positiven Anteils insbesondere einem Stromrückfluss durch den ersten Schalter.

Der positive Anteil des Schalterstroms entspricht vorzugsweise einem Strom, der von dem betragsmäßig potentialhöheren Eingangsanschluss der synchronen Sperrwandlerschaltung durch die Primärwicklung des Transformators und den ersten Schalter im leitenden Zustand zu dem betragsmäßig potentialniedrigeren Eingangsanschluss fließt. Der negative Anteil des Schalterstroms entspricht vorzugsweise einem Strom, der von dem betragsmäßig potentialniedrigeren Eingangsanschluss der synchronen Sperrwandlerschaltung durch den ersten Schalter im leitenden Zustand und die Primärwicklung des Transformators zu dem betragsmäßig potentialhöheren Eingangsanschluss fließt.

Wie bereits vorstehende ausgeführt, trennt bzw. entkoppelt der Transformator eine Primärseite der synchronen Sperrwandlerschaltung von einer Sekundärseite der synchronen Sperrwandlerschaltung, sodass eine galvanische Trennung zwischen dem Eingang und dem Ausgang der synchronen Sperrwandlerschaltung besteht. Die synchrone Sperrwandlerschaltung ist also dazu eingerichtet, elektrische Energie zwischen ihrer Primärseite (kann auch als Eingangsseite bezeichnet werden) und ihrer Sekundärseite (kann auch als Ausgangsseite bezeichnet werden) mittels des Transformators potentialgetrennt zu übertragen.

Wie bereits vorstehend ausgeführt, wird unter einer *"synchronen Sperrwandlerschaltung"* insbesondere eine "normale" Sperrwanderschaltung verstanden, bei der die zur Gleichrichtung dienende wenigstens eine sekundärseitige Diode durch wenigstens einen steuerbaren sekundärseitigen Schalter ersetzt ist.

Die Steuereinheit ist vorzugsweise dazu eingerichtet den erste Schalter und den zweite Schalter alternierend anzusteuern bzw. zu takten. Mit anderen Worten, wenn der erste Schalter leitend geschaltet ist, dann ist vorzugsweise der zweite Schalter nicht leitend geschaltet; und wenn der erste Schalter nicht leitend geschaltet ist, dann ist vorzugsweise der zweite Schalter leitend geschaltet.

Zur Erzeugung eines ausgangsseitigen Stroms für den Betrieb der Leuchtmittelstrecke ist die Steuereinheit der erfindungsgemäßen synchronen Sperrwandlerschaltung also vorzugsweise dazu eingerichtet, den erste Schalter und zweite Schalter alternierend im leitenden Zustand zu betreiben. Insbesondere ist die Steuereinheit dazu eingerichtet, den ersten Schalter und zweiten Schalter alternierend und periodisch im leitenden Zustand zu betreiben.

Zum Erreichen eines durch ein Dimmsignal vorgegebenes Dimmlevel bzw. Dimmniveau ist die Steuereinheit vorzugsweise dazu eingerichtet, den ersten und zweiten Schalter gemäß dem Dimmsignal alternierend im leitenden Zustand zu betreiben. Zum Erreichen eines durch ein Dimmsignal vorgegebenes Dimmlevel bzw. Dimmniveau ist die Steuereinheit insbesondere dazu eingerichtet, den ersten und zweiten Schalter gemäß dem Dimmsignal alternierend und periodisch im leitenden Zustand zu betreiben.

Wenn während der Einschaltzeitdauer des ersten Schalters der erste Schalter im leitenden Zustand bzw. leitend und der zweite Schalter im nicht leitenden Zustand bzw. nicht leitend ist, dann fließt auf der Primärseite der synchronen Sperrwandlerschaltung ein Strom durch die Primärwicklung des Transformators und den leitenden ersten Schalter, der durch eine am Eingang zugeführte Versorgungsspannung gespeist wird, und elektrische Energie wird in der Primärwicklung gespeichert. Wenn der erste Schalter nicht leitend geschaltet und der zweite Schalter leitend geschaltet wird, dann wird die in der Primärwicklung gespeicherte elektrische Energie an die Sekundärwicklung des Transformators übertragen. Folglich fließt dann während der Einschaltzeitdauer des zweiten Schalters (erster Schalter nicht leitend und zweiter Schalter leitend) ein Strom auf der Sekundärseite ausgehend von der Sekundärwicklung über den leitenden zweiten Schalter zur am Ausgang angeschlossenen Leuchtmittelstrecke. Dieser Storm entspricht dann folglich dem durch die synchrone Sperrwandlerschaltung ausgangsseitig bereitgestellten Strom für den Betrieb der Leuchtmittelstrecke.

Zum Dimmen der Leuchtmittelstrecke muss der zeitliche Mittelwert des Stroms, der durch die synchrone Sperrwandlerschaltung ausgangsseitig der Leuchtmittelstrecke bereitgestellt wird, verkleinert werden. Je niedriger bzw. kleiner das Dimmlevel bzw. Dimmniveau desto niedriger bzw. kleiner ist die Helligkeit des durch die Leuchtmittelstrecke abgegebenen Lichts.

Zur Erzielung von sehr niedrigen Dimmlevels, also sehr niedrigen Helligkeiten, muss ein entsprechend sehr klein dimensionierter zeitlicher Mittelwert des der Leuchtmittelstrecke ausgangsseitig bereitgestellten Stroms erzielt werden. Da der der Leuchtmittelstrecke ausgangsseitig bereitgestellte Strom dem durch die Sekundärwicklung des Transformators der synchronen Sperrwandlerschaltung fließenden Strom entspricht, muss also der zeitliche Mittelwert des durch die Sekundärwicklung fließenden Stroms bzw. des über den Transformator der synchronen Sperrwandlerschaltung ausgangseitig bereitgestellten Stroms entsprechend klein eingestellt werden.

Hierzu kann die Steuereinheit dazu eingerichtet sein, die Einschaltzeitdauer des zweiten Schalters derart zu steuern, dass die Polarität des durch die Sekundärwicklung und zweiten Schalter fließenden Stroms von einer positiven Polarität auf eine negative Polarität wechselt und folglich die Spannung an der Sekundärwicklung umschwingt, d.h. z.B. von einer positiven Polarität auf eine negative Polarität oder in Bezug auf eine andere Referenzspannung, wie beispielsweise eine Busspannung. Dies bedeutet, dass die Steuereinheit vorzugsweise dazu eingerichtet ist, den zweiten Schalter so lange im leitenden Zustand zu betreiben, bis sich die Richtung des durch die Sekundärwicklung fließenden Stroms umkehrt. Beim darauffolgenden Einschalten des ersten Schalters weist dann der durch den ersten Schalter fließende Schalterstrom einen negativen Anteil und einen positiven Anteil auf.

Ein Betrieb der synchronen Sperrwandlerschaltung, insbesondere des ersten Schalters und zweiten Schalters, durch die Steuereinheit, bei dem während der alternierenden, insbesondere alternierenden und periodischen, Ansteuerung des ersten Schalters und zweiten Schalters die Einschaltzeitdauer des zweiten Schalters derart gewählt ist, dass die Polarität des durch die Sekundärwicklung und zweiten Schalter fließenden Stroms von einer positiven Polarität auf eine negative Polarität wechselt, kann auch als synchrone Betriebsart bzw. synchroner Betriebsmodus bezeichnet werden.

Indem der durch die Sekundärwicklung fließende Strom zumindest zeitweise eine negative Polarität aufweist, kann ein besonders kleiner zeitlicher Mittelwert des durch die Sekundärwicklung fließenden Stroms erzielt werden. Dadurch kann die erfindungsgemäße synchrone Sperrwandlerschaltung einen klein dimensionierter Strom für die Leuchtmittelstrecke ausgangseitig ausgeben und somit können entsprechend geringe Helligkeiten des von der Leuchtmittelstrecke abgestrahlten Lichts für entsprechende Dimmsignale für die Leuchtmittelstrecke erzielt werden.

Der erste Schalter und der zweite Schalter sind vorzugsweise ein Leistungsschalter, ein Feldeffekttransistor, wie z.B. ein Metall-Oxid-Halbleiter-Feldeffekttransistor (MOSFET), oder ein Bipolartransistor. Es können auch andere Schaltertypen, insbesondere Transistortypen, für den ersten und zweiten Schalter verwendet werden. Der erste und zweite Schalter sind vorzugsweise vom gleichen Schaltertyp, insbesondere Transistortyp.

Die Steuereinheit ist vorzugsweise dazu eingerichtet, den erste Schalter und zweiten Schalter hochfrequent, insbesondere mit einer Frequenz größer gleich 80 kHz, insbesondere größer gleich 100 kHz, ganz insbesondere größer gleich 150 kHz anzusteuern bzw. zu takten.

Die Steuereinheit ist vorzugsweise durch die alternierende, insbesondere alternierende und periodische, Taktung des ersten Schalters und zweiten Schalters, d.h. durch alternierendes, insbesondere alternierendes und periodisches, Ein- und Ausschalten des ersten und zweiten Schalters, und dem dadurch verursachten Laden und Entladen des Transformators dazu eingerichtet, ausgehend von einer am Eingang der synchronen Sperrwandlerschaltung anschließbaren elektrischen Energiequelle eine am Ausgang der synchronen Sperrwandlerschaltung bereitgestellte elektrische Energie, Strom und/oder Spannung einzustellen.

Die Steuereinheit ist dazu eingerichtet, auf der Basis des separat erfassten zeitlichen Mittelwerts des positiven Anteils des Schalterstrom und zeitlichen Mittelwerts des negativen Anteils des Schalterstroms den ersten Schalter und zweiten Schalter alternierend, insbesondere alternierend und periodisch, anzusteuern. Insbesondere ist die Steuereinheit vorzugsweise dazu eingerichtet, auf der Basis der Kombination des zeitlichen Mittelwerts des positiven Anteils des Schalterstroms und des zeitlichen Mittelwerts des negativen Anteils des Schalterstroms den ersten Schalter und zweiten Schalter alternierend, insbesondere alternierend und periodisch, anzusteuern.

Die Steuereinheit kann eine integrierte Halbleiterschaltung sein oder eine integrierte Halbleiterschaltung umfassen. Die Steuereinheit ist vorzugsweise ein FPGA, Prozessor, ein Mikroprozessor, ein Controller, ein Mikrocontroller oder eine anwendungsspezifische integriert Schaltung (ASIC) oder eine Kombination aus diesen genannten Elementen.

Die synchrone Sperrwandlerschaltung kann eingangsseitig an eine elektrische Energiequelle angeschlossen werden, die der synchronen Sperrwandlerschaltung dann eine Gleichspannung oder eine gleichgerichtete Wechselspannung, welche vorzugsweise geglättet bzw. gesiebt wurde, eingangsseitig bereitstellt.

Die Leuchtmittelstrecke umfasst vorzugsweise ein oder mehrere Leuchtmittel. Die Leuchtmittel sind vorzugsweise in Reihe und/oder parallel miteinander elektrisch verbunden, falls mehr als ein Leuchtmittel in der Leuchtmittelstrecke angeordnet ist.

Als Leuchtmittel können alle dem Fachmann bekannten Leuchtmittel verwendet werden, deren Lichtemission durch die dem Leuchtmittel zugeführte elektrische Energie steuerbar ist. Vorzugsweise entspricht das wenigstens eine Leuchtmittel der Leuchtmittelstrecke einer Leuchtdiode (LED). Die Leuchtmittelstrecke kann jede Art von Leuchtdiode umfassen, wie z.B. eine organische Leuchtdiode, eine anorganische Leuchtdiode, eine Leuchtdiode mit Sekundäranregung usw. Vorzugsweise umfasst die Leuchtmittelstrecke unterschiedliche Arten von Leuchtmitteln oder nur eine Art von Leuchtmitteln. Die vorliegende Erfindung ist nicht auf ein bestimmtes Leuchtmittel beschränkt.

Vorzugsweise weist die Erfassungsschaltung zwei Erfassungszweige auf; wobei ein erster Erfassungszweig der zwei Erfassungszweige dazu eingerichtet ist, den zeitlichen Mittelwert des negativen Anteils des Schalterstroms zu erfassen und das diesen zeitlichen Mittelwert wiedergebende erste Signal an die Steuereinheit zuzuführen; und ein zweiter Erfassungszweig der zwei Erfassungszweige dazu eingerichtet ist, den zeitlichen Mittelwert des positiven Anteils des Schalterstroms zu erfassen und das diesen zeitlichen Mittelwert wiedergebende zweite Signal an die Steuereinheit zuzuführen.

Die Steuereinheit kann das von dem ersten Erfassungszweig zugeführte erste Signal und das von dem zweiten Erfassungszweig zugeführte zweite Signal analog oder digital verarbeiten.

Insbesondere bei einer digitalen Verarbeitung des von der Erfassungsschaltung zugeführten ersten und zweiten Signals kann in der Steuereinheit ein kostengünstiger Analog-Digital-Umsetzer verwendet werden, da das bei einem solchen Analog-Digital-Umsetzer auftretende Rauschen auch bei niedrigen Dimmlevels und folglich kleinen zeitlichen Mittelwerten des Schalterstroms im Vergleich zu dem zeitlichen Mittelwert des positiven Anteils des Schalterstroms und dem zeitlichen Mittelwert des negativen Anteils des Schalterstroms klein ist und daher diese zwei erfassten zeitlichen Mittelwerte nicht verfälscht.

Ferner weist der erste Erfassungszweig vorzugsweise eine erste Diode auf, deren Kathode mit dem ersten Schalter derart elektrisch verbunden ist, dass nur der negative Anteil des durch den ersten Schalter fließenden Schalterstroms durch den ersten Erfassungszweig fließen kann; und der zweite Erfassungszweig weist vorzugsweise eine zweite Diode auf, deren Anode mit dem Schalter derart elektrisch verbunden ist, dass nur der positive Anteil des durch den ersten Schalter fließenden Schalterstroms durch den zweiten Erfassungszweig fließen kann.

Des Weiteren weist der erste Erfassungszweig vorzugsweise einen ersten Kondensator auf, der mit der Anode der ersten Diode derart elektrisch verbunden ist, dass er von dem negativen Anteil des durch den ersten Schalter fließenden Schalterstroms geladen wird; und der zweite Erfassungszweig weist vorzugsweise einen zweiten Kondensator auf, der mit der Kathode der zweiten Diode derart elektrisch verbunden ist, dass er von dem positiven Anteil des durch den ersten Schalter fließenden Schalterstroms geladen wird; wobei das erste Signal eine von dem ersten Kondensator abgegebene Spannung und das zweite Signal eine von dem zweiten Kondensator abgegebene Spannung ist.

Mit anderen Worten umfasst der erste Erfassungszweig vorzugsweise einen ersten Kondensator zur Bildung des zeitlichen Mittelwerts des negativen Anteils des durch den ersten Schalter fließenden Stroms und der zweite Erfassungszweig umfasst vorzugsweise einen zweiten Kondensator zur Bildung des zeitlichen Mittelwerts des positiven Anteils des durch den ersten Schalter fließenden Stroms.

Zusätzlich kann ein erster Faktor, der die bei der Signalerzeugung entstehenden Abweichungen des ersten Signals von dem tatsächlich durch die Primärwicklung und den ersten Schalter fließenden mittleren negativen Anteil des Stroms wiedergibt bzw. ausgleicht, sowie ein zweiter Faktor, der die bei der Signalerzeugung entstehenden Abweichungen des zweiten Signals von dem tatsächlich durch die Primärwicklung und den ersten Schalter fließenden mittleren positiven Anteil des Stroms wiedergibt bzw. ausgleicht, berechnet oder experimentell ermittelt werden. Hierbei unterscheiden sich vorzugsweise der erste Faktor und der zweite Faktor nicht.

Die Steuereinheit kann dazu eingerichtet sein, den negativen Anteil des Stroms aus der von dem ersten Kondensator abgegebenen Spannung mittels diesem vorgegebenen, die Relation zwischen dem durch den ersten Schalter fließenden negativen Anteil des Stroms und der von dem ersten Kondensator abgegebenen Spannung anzeigenden ersten Faktor zu ermitteln. Die Steuereinheit kann ferner dazu eingerichtet sein, den positiven Anteil des Stroms aus der von dem zweiten Kondensator abgegebenen Spannung mittels diesem vorgegebenen, die Relation zwischen dem durch den ersten Schalter fließenden positiven Anteil des Stroms und der von dem zweiten Kondensator abgegebenen Spannung anzeigenden zweiten Faktor zu ermitteln

Vorzugsweise ist der erste Kondensator Bestandteil eines ersten Tiefpassfilters und der zweite Kondensator ist vorzugsweise Bestandteil eines zweiten Tiefpassfilters.

Vorzugsweise sind die erste Diode und die zweite Diode in demselben Gehäuse angeordnet.

Das heißt, die erste Diode des ersten Erfassungszweigs und die zweite Diode des zweiten Erfassungszweigs sind vorzugsweise in demselben Gehäuse bzw. Package untergebracht.

Dies ist vorteilhaft, da dann die erste Diode und die zweite Diode die gleiche Temperaturabhängigkeit zeigen, und folglich die separate Erfassung des negativen und positiven Anteils des durch den ersten Schalter fließenden Schalterstroms durch den ersten Erfassungszweig und zweiten Erfassungszweig nicht durch eine unterschiedliche Temperaturabhängigkeit der ersten Diode und zweiten Diode gestört, insbesondere verfälscht wird.

Vorzugsweise ist die Steuereinheit dazu eingerichtet, den ersten Schalter und zweiten Schalter derart alternierend einzuschalten, dass während der Einschaltzeitdauer des zweiten Schalters die Polarität des durch den zweiten Schalter fließenden Stroms von einer positiven Polarität auf eine negative Polarität wechselt, sodass während der nachfolgenden Einschaltzeitdauer des ersten Schalters der durch den ersten Schalter fließende Schalterstrom einen negativen Anteil und einen positiven Anteil aufweist.

Das heißt, bei der alternierenden Ansteuerung des ersten Schalters und zweiten Schalters durch die Steuereinheit kann die Einschaltzeitdauer des zweiten Schalters derart gewählt sein, dass während der Einschaltzeitdauer des zweiten Schalters die Polarität des durch den zweiten Schalter fließenden Stroms von einer positiven Polarität auf eine negative Polarität wechselt, sodass während der nachfolgenden Einschaltzeitdauer des ersten Schalters der durch den ersten Schalter fließende Schalterstrom einen negativen Anteil und einen positiven Anteil aufweist.

Insbesondere ist die Steuereinheit dazu eingerichtet, den ersten Schalter und zweiten Schalter derart alternierend und periodisch einzuschalten, dass während der Einschaltzeitdauer des zweiten Schalters die Polarität des durch den zweiten Schalter fließenden Stroms von einer positiven Polarität auf eine negative Polarität wechselt, sodass während der nachfolgenden Einschaltzeitdauer des ersten Schalters der durch den ersten Schalter fließende Schalterstrom einen negativen Anteil und einen positiven Anteil aufweist.

Ferner ist die Steuereinheit vorzugsweise dazu eingerichtet, den tatsächlichen zeitlichen Mittelwert des Schalterstroms durch eine Kombination des zeitlichen Mittelwertes des positiven Anteils des Schalterstroms mit dem zeitlichen Mittelwert des negativen Anteils des Schalterstroms zu ermitteln.

Wie bereits vorstehend ausgeführt, verfälscht ein Rauschens, das bei der Erfassung auftreten kann, den separat erfassten zeitlichen Mittelwert des positiven Anteils des Schalterstroms und zeitlichen Mittelwert des negativen Anteils des Schalterstroms nicht. Folglich entspricht der durch die Steuereinheit ermittelte zeitliche Mittelwert des Schalterstroms, der durch eine Kombination des erfassten zeitlichen Mittelwertes des positiven Anteils des Schalterstroms mit dem erfassten zeitlichen Mittelwert des negativen Anteils des Schalterstroms ermittelt wird, dem tatsächlichen zeitlichen Mittelwert des Schalterstroms und wird daher auch als solcher bezeichnet.

Der zeitliche Mittelwert des positiven Anteils des Schalterstroms entspricht insbesondere dem positiven Durchschnittsstrom, der während der Einschaltzeitdauer des ersten Schalters durch den ersten Schalter fließt. Der zeitliche Mittelwert des negativen Anteils des Schalterstroms entspricht insbesondere dem negativen Durchschnittsstrom, der während der Einschaltzeitdauer des ersten Schalters durch den ersten Schalter fließt. Der tatsächliche zeitliche Mittelwert des Schalterstroms entspricht insbesondere dem Durchschnittsstrom, der während der Einschaltzeitdauer des ersten Schalters tatsächlich durch den ersten Schalter fließt.

Die Steuereinheit ist vorzugsweise dazu eingerichtet, auf der Basis des ermittelten tatsächlichen zeitlichen Mittelwerts des Schalterstroms, insbesondere auf der Basis der Kombination des erfassten zeitlichen Mittelwerts des positiven Anteils des Schalterstroms und des erfassten zeitlichen Mittelwerts des negativen Anteils des Schalterstroms, den ersten Schalter und zweiten Schalter alternierend, insbesondere alternierend und periodisch anzusteuern.

Die Steuereinheit ist insbesondere dazu eingerichtet, den Zeitpunkt des Aus- und/oder Einschaltens des ersten Schalters auf Grundlage des ermittelten tatsächlichen zeitlichen Mittelwerts des Schalterstroms, insbesondere auf der Grundlage des erfassten zeitlichen Mittelwertes des positiven Anteils des Schalterstroms und des zeitlichen Mittelwertes des negativen Anteils des Schalterstroms, einzustellen. Mit dem Setzen des Ausschaltzeitpunkts und des Einschaltzeitpunkts des ersten Schalters wird die Einschaltzeitdauer bzw. die Ausschaltzeitdauer des ersten Schalters eingestellt.

Der Ausschaltzeitpunkt des ersten Schalters kann auch mittelbar durch Einstellen einer Einschaltzeitdauer relativ zum Einschaltzeitpunkt des ersten Schalters festgelegt werden.

Bei einer alternierenden Ansteuerung des ersten und zweiten Schalters ergibt sich dann über den Zeitpunkt des Aus- und/oder Einschaltens des ersten Schalters der Zeitpunkt des Ein- und/oder Ausschaltens des zweiten Schalters.

Alternativ oder zusätzlich kann die Steuereinheit dazu eingerichtet sein, den Zeitpunkt des Aus- und/oder Einschaltens des zweiten Schalters auf Grundlage des ermittelten tatsächlichen zeitlichen Mittelwerts des Schalterstroms, insbesondere auf der Grundlage des erfassten zeitlichen Mittelwertes des positiven Anteils des Schalterstroms und des zeitlichen Mittelwertes des negativen Anteils des Schalterstroms, einzustellen.

Für eine Regelung der von der synchronen Sperrwandlerschaltung ausgangsseitig bereitgestellten elektrischen Energie bzw. des von der synchronen Sperrwandlerschaltung ausgangsseitig bereitgestellten Stroms zum Betrieb der ausgangsseitig anschließbaren Leuchtmittelstrecke kann die Steuereinheit dazu eingerichtet sein, den Zeitpunkt des Aus- und/oder Einschaltens des ersten Schalters und/oder den Zeitpunkt des Aus- und/oder Einschaltens des zweiten Schalters auf Grundlage einer Abweichung des ermittelten tatsächlichen zeitlichen Mittelwerts des durch den ersten Schalter fließenden Schalterstroms von einem vorgegebenen Wert einzustellen.

Die Steuereinheit ist also vorzugsweise dazu eingerichtet, den Zeitpunkt des Aus- und/oder Einschaltens des ersten Schalters und/oder den Zeitpunkt des Aus- und/oder Einschaltens des zweiten Schalters auf Grundlage einer Abweichung der Kombination aus dem erfassten zeitlichen Mittelwert des positiven Anteils des Schalterstroms und dem erfassten zeitlichen Mittelwert des negativen Anteils des Schalterstroms von einem vorgegebenen Wert einzustellen.

Je nach Höhe der bestimmten Abweichung kann der Zeitpunkt des Ausschaltens des ersten Schalters mehr oder weniger verzögert bzw. der Zeitpunkt des Einschaltens des ersten Schalters vorgezogen werden, um beispielsweise eine zu niedrige ausgangsseitig bereitgestellte elektrische Energie bzw. einen zu niedrigen bereitgestellten Strom zu korrigieren.

Um die Ausführungsform der erfindungsgemäßen synchronen Sperrwandlerschaltung zu erreichen können die vorstehenden optionalen Merkmale beliebig kombiniert werden.

Gemäß der vorliegenden Erfindung wird ferner eine Leuchte mit einer erfindungsgemäßen synchronen Sperrwandlerschaltung gemäß den vorstehenden Ausführungen und einer Leuchtmittelstrecke mit wenigstens einem Leuchtmittel, insbesondere mit wenigstens einer Leuchtdiode bereitgestellt; wobei die synchrone Sperrwandlerschaltung dazu eingerichtet ist, ausgehend von einer eingangsseitig zugeführten Eingangsspannung eine Ausgangsspannung zum Betrieb der Leuchtmittelstrecke ausgangsseitig bereitzustellen.

Mit anderen Worten wird ferner eine erfindungsgemäße Leuchte bereitgestellt, die neben einer Leuchtmittelstrecke mit wenigstens einem Leuchtmittel, insbesondere mit wenigstens einer Leuchtdiode, eine erfindungsgemäße synchrone Sperrwandlerschaltung gemäß der vorstehend beschriebenen Ausführungsform aufweist.

Die Leuchtmittelstrecke ist insbesondere an der erfindungsgemäßen synchronen Sperrwandlerschaltung ausgangsseitig angeschlossen.

Die Leuchtmittelstrecke umfasst vorzugsweise ein oder mehrere Leuchtmittel. Die Leuchtmittel sind vorzugsweise in Reihe und/oder parallel miteinander elektrisch verbunden, falls mehr als ein Leuchtmittel in der Leuchtmittelstrecke angeordnet ist.

Als Leuchtmittel können alle dem Fachmann bekannten Leuchtmittel verwendet werden, deren Lichtemission durch die dem Leuchtmittel zugeführte elektrische Energie steuerbar ist. Vorzugsweise entspricht das wenigstens eine Leuchtmittel der Leuchtmittelstrecke einer Leuchtdiode (LED). Die Leuchtmittelstrecke kann jede Art von Leuchtdiode umfassen, wie z.B. eine organische Leuchtdiode, eine anorganische Leuchtdiode, eine Leuchtdiode mit Sekundäranregung usw. Vorzugsweise umfasst die Leuchtmittelstrecke unterschiedliche Arten von Leuchtmitteln oder nur eine Art von Leuchtmitteln. Die vorliegende Erfindung ist nicht auf ein bestimmtes Leuchtmittel beschränkt.

Des Weiteren wird ein Verfahren zum Betreiben einer nicht erfindungsgemäßen synchronen Sperrwandlerschaltung gemäß dem vorstehend beschriebenen Beispiel bereitgestellt; wobei das Verfahren den folgenden Schritt umfasst: Separates Ermitteln, mit der Steuereinheit, auf der Basis des ausgehend von der Erfassungsschaltung zugeführten Signals einen zeitlichen Mittelwert des positiven Anteils des durch den ersten Schalter fließenden Schalterstroms und einen zeitlichen Mittelwert des negativen Anteils des durch den ersten Schalter fließenden Schalterstroms.

Gemäß der vorliegenden Erfindung wird ferner ein Verfahren zum Betreiben einer erfindungsgemäßen synchronen Sperrwandlerschaltung gemäß der vorstehend beschriebenen Ausführungsform bereitgestellt; wobei das Verfahren die folgenden Schritte umfasst: Separates Erfassen, mit der Erfassungsschaltung, einen zeitlichen Mittelwert des positiven Anteils des durch den ersten Schalter fließenden Schalterstroms und einen zeitlichen Mittelwert des negativen Anteils des durch den ersten Schalter fließenden Schalterstroms; Zuführen, mit der Erfassungsschaltung, ein den zeitlichen Mittelwert des negativen Anteils des Schalterstroms wiedergebendes erstes Signal und ein den zeitlichen Mittelwert des positiven Anteils des Schalterstroms wiedergebendes zweites Signal an die Steuereinheit; und alternierendes Ansteuern des ersten Schalters und des zweiten Schalters auf der Basis des der Steuereinheit zugeführten ersten Signals und zweiten Signals.

### 4. Beschreibung bevorzugter Ausführungsformen

Nachfolgend wird eine detaillierte Beschreibung der Figuren gegeben. Darin zeigt:
- **Figur 1**: beispielhaft einen schematischen Schaltplan eines Beispiels einer nicht erfindungsgemäßen synchronen Sperrwandlerschaltung;
- **Figur 2**: beispielhaft einen schematischen Schaltplan einer Ausführungsform der erfindungsgemäßen synchronen Sperrwandlerschaltung; und
- **Figur 3**: ein Beispiel für die Ansteuerung des ersten und zweiten Schaltersdes Beispiels der nicht erfindungsgemäßen synchronen Sperrwandlerschaltung oder der Ausführungsform der erfindungsgemäßen Sperrwandlerschaltung im synchronen Betriebsmodus und die dadurch resultierenden zeitlichen Verläufe des durch den ersten Schalter fließenden Schalterstroms und des durch den zweiten Schalter fließenden Stroms.

In den Figuren sind sich entsprechende oder ähnliche Elemente mit identischen Bezugszeichen gekennzeichnet.

**Figur 1** zeigt beispielhaft einen schematischen Schaltplan des Beispiels der nicht erfindungsgemäßen synchronen Sperrwandlerschaltung.

Die synchrone Sperrwandlerschaltung 1 der Figur 1 umfasst einen Transformator T, der eine galvanische Trennung GT zwischen einer Primärseite PS oder Eingangsseite und einer Sekundärseite SS oder Ausgangsseite der synchronen Sperrwandlerschaltung 1 bereitstellt. Folglich weist die synchrone Sperrwandlerschaltung 1 zwischen ihrem Eingang E1, E1' und ihrem Ausgang A1, A1' eine galvanische Trennung GT auf, die durch den Transformator T bereitgestellt wird.

An den Eingang, insbesondere an die wenigstens zwei Eingangsanschlüsse E1 und E1', ist eine elektrische Energiequelle bzw. elektrische Energieversorgung anschließbar (in Figur 1 nicht gezeigt), die der synchronen Sperrwandlerschaltung 1 im angeschlossenen Zustand eingangsseitig eine Gleichspannung oder eine gleichgerichteten Wechselspannung, die vorzugsweise auch geglättet bzw. gesiebt wurde, bereitstellen kann.

An den Ausgang, insbesondere an die wenigstens zwei Ausgangsanschlüssen A1 und A1', ist eine Leuchtmittelstrecke 4 mit wenigstens einem Leuchtmittel 5 anschließbar. Gemäß der Figur 1 umfasst die Leuchtmittelstrecke 4 drei Leuchtmittel 5, erfindungsgemäß kann die Leuchtmittelstrecke 4 aber auch nur ein, zwei oder mehr als drei Leuchtmittel 5 aufweisen.

Wie bereits vorstehend ausgeführt können die Leuchtmittel 5 in Reihe und/oder parallel miteinander elektrisch verbunden sein, falls mehr als ein Leuchtmittel in der Leuchtmittelstrecke angeordnet ist. Als Leuchtmittel 5 können alle dem Fachmann bekannten Leuchtmittel verwendet werden, deren Lichtemission durch die dem Leuchtmittel zugeführte elektrische Energie steuerbar ist. Vorzugsweise entsprechen die Leuchtmittel 5 der Leuchtmittelstrecke 4 einer Leuchtdiode (LED). Die Leuchtmittelstrecke 4 kann jede Art von Leuchtdiode umfassen, wie z.B. eine organische Leuchtdiode, eine anorganische Leuchtdiode, eine Leuchtdiode mit Sekundäranregung usw. Vorzugsweise umfasst die Leuchtmittelstrecke 4 unterschiedliche Arten von Leuchtmitteln oder nur eine Art von Leuchtmitteln.

Die synchrone Sperrwandlerschaltung 1 und die Leuchtmittelstrecke 4 bilden zusammen eine erfindungsgemäße Leuchte.

Auf der Primärseite PS der in Figur 1 gezeigten synchronen Sperrwanderschaltung 1 sind der Eingang, insbesondere die Eingangsanschlüsse E1 und E1' ; die Primärwicklung Np des Transformators T; eine Erfassungswicklung Ne; ein erster Schalter S1; eine Erfassungsschaltung 3 sowie eine Steuereinheit 2 angeordnet.

Der erste Schalter S1 ist mit der Primärwicklung Np des Transformators T in Reihe elektrisch verbunden.

Folglich fließt im leitenden Zustand des ersten Schalters S1 der Schalterstrom I_{S1} durch die Primärwicklung Np und den ersten Schalter S1, wobei die Primärwicklung Np durch den Schalterstrom I_{S1} geladen wird.

Auf der Sekundärseite SS der in Figur 1 gezeigten synchronen Sperrwandlerschaltung 1 sind der Ausgang, insbesondere die Ausgangsanschlüsse A1 und A1'; die Sekundärwicklung Ns des Transformators T; ein zweiter Schalter S2 und ein optionaler Kondensator C2 angeordnet.

Die Sekundärwicklung Ns des Transformators T ist über den zweiten Schalter S2 mit dem optionalen Kondensator C2 und dem Ausgang der synchronen Sperrwandlerschaltung elektrisch verbunden.

Die Sekundärwicklung Ns des Transformators T und der zweite Schalter S2 sind in Reihe zwischen dem ersten Ausgangsanschluss A1 und dem zweiten Ausgangsanschluss A1' elektrisch verbunden.

Der optionale Kondensator C2 ist insbesondere ein Glättungskondensator bzw. ein Siebungskondensator. Der optionale Kondensator C2 dient folglich vorzugsweise der Glättung bzw. Siebung.

Die Primärwicklung Np und die Sekundärwicklung Ns des Transformators T weisen vorzugsweise eine unterschiedliche Polarität/Wicklungsrichtung auf.

Gemäß der Figur 1 ist der zweite Schalter S2 zwischen einem zweiten Anschluss der Sekundärwicklung Ns und dem zweiten Ausgangsanschluss A1' geschaltet. Alternativ kann der zweite Schalter S2 aber auch zwischen dem ersten Anschluss der Sekundärwicklung Ns und dem ersten Ausgangsanschluss A1 geschaltet sein (in Figur 1 nicht gezeigt). Die Polarität/Wicklungsrichtung der Primärwicklung Np und der Sekundärwicklung Ns des Transformators T sowie optional der Anschluss der Leuchtmittelstrecke 4 an dem Ausgang A1, A1' können dann vorzugsweise entsprechend angepasst werden.

Auf der Primärseite PS der synchronen Sperrwandlerschaltung 1 sind der erste Schalter S1 und die Primärwicklung Np des Transformators T derart eingerichtet, dass im leitenden Zustand des ersten Schalters S1 ausgehend von einer an den Eingang E1, E1' anschließbaren elektrischen Energiequelle ein Strom I_{S1} (Schalterstrom) durch die Primärwicklung Np des Transformtors T und den ersten Schalter S1 fließt, wodurch die Primärwicklung Np des Transformator T mit elektrischer Energie geladen wird. Die elektrische Energie wird dann von der Primärwicklung Np zur Sekundärwicklung Ns, also von der Primärseite PS zur Sekundärseite SS, potentialgetrennt übertragen, wenn der erste Schalter S1 ausgeschaltet wird. Die Sekundärwicklung Ns wird dann im nicht leitenden Zustand des ersten Schalters S1 entladen, insbesondere entmagnetisiert.

Hierbei wird der zweite Schalter S2 vorzugsweise komplementär bzw. alternierend zum ersten Schalter S1 getaktetet. Das heißt, wenn der erste Schalter S1 leitend geschaltet wird, dann wird der zweite Schalter S2 nicht leitend geschaltet; und wenn der erste Schalter S1 nicht leitend geschaltet wird, dann wird der zweite Schalter S2 leitend geschaltet.

Der erste Schalter S1 und der zweite Schalter S2 sind vorzugsweise ein Leistungsschalter, ein Feldeffekttransistor, wie z.B. ein Metall-Oxid-Halbleiter-Feldeffekttransistor (MOSFET), oder ein Bipolartransistor.

Die Steuereinheit 2 ist dazu eingerichtet, die am Ausgang A1, A1' der synchronen Sperrwandlerschaltung 1 bereitgestellte elektrische Energie, Strom und/oder Spannung einzustellen und somit den Betrieb der am Ausgang angeschlossenen Leuchtmittelstrecke 4 zu steuern.

Die primärseitige Steuereinheit 2 ist zur Steuerung des ersten Schalters S1 und des zweiten Schalters S2 eingerichtet (dies wird in der Figur 1 durch entsprechende Pfeile angedeutet). Hierfür ist die primärseitige Steuereinheit 2 dazu eingerichtet, entsprechende Steuersignale St1 und St2 zu erzeugen und diese dem ersten Schalter S1 und dem zweiten Schalter S2 zuzuführen (dem ersten Schalter S1 wird das Steuersignal St1 und dem zweiten Schalter S2 wird das Steuersignal St2 zugeführt). Die Steuerung des zweiten Schalters S2 durch die primärseitige Steuereinheit 2 erfolgt hierbei galvanisch getrennt bzw. potentialgetrennt (nicht gezeigt).

Die primärseitige Steuereinheit 2 des in Figur 1 gezeigten nicht erfindungsgemäßen synchronen Sperrwandlerschaltung ist insbesondere dazu eingerichtet, den ersten Schalter S1 und den zweiten Schalter S2 gemäß den vorstehenden Ausführungen zum Beispiel der nicht erfindungsgemäßen synchronen Sperrwandlerschaltung zu steuern.

Folglich ist die Steuereinheit 2 dazu eingerichtet, die synchrone Sperrwandlerschaltung 1, insbesondere den ersten Schalter S1 und den zweiten Schalter S2, im vorstehend beschriebenen synchronen Betriebsmodus zu betreiben.

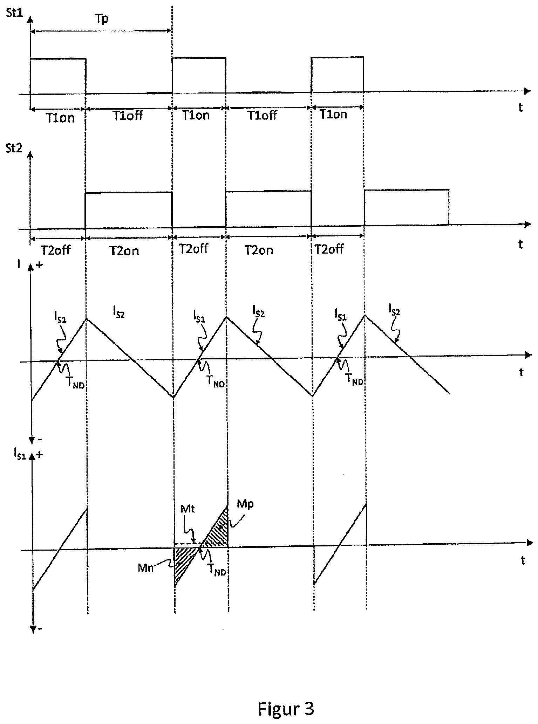

Hierbei ist die Steuereinheit 2 vorzugsweise dazu eingerichtet, den ersten Schalter S1 und zweiten Schalter S2 alternierend im leitenden Zustand zu betreiben. Insbesondere ist die Steuereinheit 2 dazu eingerichtet, den ersten Schalter S1 und zweiten Schalter S2 alternierend und periodisch im leitenden Zustand zu betreiben. Diesbezüglich wird auf die Figur 3 verwiesen, die ein Beispiel für den zeitlichen Verlauf des Steuersignals St1 zur Ansteuerung des ersten Schalters S1 und den zeitlichen Verlauf des Steuersignals St2 zur Ansteuerung des zweiten Schalters S2 bei einem Betrieb der synchronen Sperrwandlerschaltung 1 im synchronen Betriebsmodus gibt.

Die primärseitige Erfassungsschaltung 3 umfasst eine Messeinheit R2 in Form eines niederohmigen Messwiderstands bzw. Shuntwiderstands zur Messung des durch den ersten Schalter S1 fließenden Schalterstroms I_{S1} und einen Tiefpassfilter TP zur Integration des über die Messeinheit R2 gemessenen Schalterstroms I_{S1}. Folglich ist die Erfassungsschaltung 3 dazu eingerichtet, einen zeitlichen Mittelwert des durch den ersten Schalter S1 fließenden Schalterstroms I_{S1} zu erfassen und ein diesen zeitlichen Mittelwert wiedergebendes Signal Sg der Steuereinheit 2 zuzuführen.

Ein niederohmiger Messwiderstand bzw. Shuntwiderstand kann auch als Strommesswiderstand bezeichnet werden.

Die Messeinheit R2 ist mit dem ersten Schalter S1 derart in Reihe elektrisch verbunden, dass die an der Messeinheit R2 abfallende Spannung proportional zu dem durch den ersten Schalter S1 fließenden Schalterstrom I_{S1} ist. Die Primärwicklung Np des Transformators T, der erste Schalter S1 und die Messeinheit R2 sind in Reihe zwischen dem ersten Eingangsanschluss E1 und dem zweiten Eingangsanschluss El' geschaltet.

Der Tiefpassfilter TP ist mit der Messeinheit R2 derart elektrisch verbunden, dass die an der Messeinheit R2 abfallende Spannung, die ein Maß für den durch den ersten Schalter S1 fließenden Schalterstrom I_{S1} ist bzw. diesen Schalterstrom I_{S1} wiedergibt, dem Tiefpassfilter TP zugeführt und folglich durch diesen gefiltert wird.

Der Tiefpassfilter TP umfasst einen Kondensator C1 und einen ohmschen Widerstand R1, wobei der Widerstand R1 an dem Messwiderstand R2 und der Kondensator C1 an Masse angeschlossen ist. Der Kondensator C1 wird über den Widerstand R1 von dem durch den ersten Schalter S1 fließenden Schalterstrom I_{S1} geladen. Das den zeitlichen Mittelwert des Schalterstroms I_{S1} wiedergebende Signal Sg ist eine von dem Kondensator C1 abgegebene Spannung U_{C1}.

Die Steuereinheit 2 kann eine integrierte Halbleiterschaltung sein oder eine integrierte Halbleiterschaltung umfassen. Die Steuereinheit 2 ist vorzugsweise ein FPGA, ein Prozessor, ein Mikroprozessor, ein Controller, ein Mikrocontroller oder eine anwendungsspezifische integriert Schaltung (ASIC) oder eine Kombination aus diesen genannten Elementen.

Der Steuereinheit 2 wird von der Erfassungsschaltung 3 ein Signal Sg zugeführt, das den zeitlichen Mittelwert des durch den ersten Schalter S1 fließenden Schalterstroms I_{S1} wiedergibt.

Die Steuereinheit 2 ist dann dazu eingerichtet, auf der Basis des bestimmten Zeitpunktes des Nulldurchgangs des Schalterstroms I_{S1} und des von der Erfassungsschaltung 3 zugeführten Signals Sg, den zeitlichen Mittelwert des positiven Anteils des Schalterstroms I_{S1} und den zeitlichen Mittelwert des negativen Anteils des Schalterstroms I_{S1} separat zu ermitteln, insbesondere zu bestimmen.

Die Steuereinheit 2 kann auch das von der Erfassungsschaltung 3 zugeführte Signal Sg analog oder digital verarbeiten.

Insbesondere ist die Steuereinheit 2 dazu eingerichtet, nach dem Einschalten bzw. leitend Schalten des ersten Schalters S1 den zeitlichen Verlauf des von der Erfassungsschaltung 3 zugeführten Signals Sg bis zum Zeitpunkt des Nulldurchgangs des Schalterstroms I_{S1} als den zeitlichen Mittelwert des negativen Anteils des Schalterstroms I_{S1} und den zeitlichen Verlauf des von der Erfassungsschaltung 3 zugeführten Signals Sg ab dem Zeitpunkt des Nulldurchgangs des Schalterstroms I_{S1} als den zeitlichen Mittelwert des positiven Anteils des Schalterstroms I_{S1} zu ermitteln, insbesondere auszuwerten.

Die Steuereinheit 2 ist dann dazu eingerichtet, den tatsächlichen zeitlichen Mittelwert des durch den ersten Schalter S1 fließenden Schalterstroms I_{S1} durch eine Kombination des zeitlichen Mittelwerts des positiven Anteils des Schalterstroms I_{S1} und des zeitlichen Mittelwerts des negativen Anteils des Schalterstroms I_{S1} zu ermitteln, insbesondere zu bestimmen.

Die Steuereinheit 2 ist durch eine alternierende, insbesondere alternierende und periodische, Taktung des ersten Schalters S1 und zweiten Schalters S2, d.h. durch alternierendes, insbesondere alternierendes und periodisches, Ein- und Ausschalten des ersten Schalters S1 und zweiten Schalters S2, und dem dadurch verursachten Laden und Entladen des Transformators T dazu eingerichtet, ausgehend von einer am Eingang E1, E1' der synchronen Sperrwandlerschaltung 1 anschließbaren elektrischen Energiequelle eine am Ausgang A1, A1' der synchronen Sperrwandlerschaltung bereitgestellte elektrische Energie, Strom und/oder Spannung einzustellen.

Die Steuereinheit 2 ist ferner dazu eingerichtet, auf der Basis des ermittelten tatsächlichen zeitlichen Mittelwertes des Schalterstroms I_{S1} den ersten Schalter S1 und den zweiten Schalter S2 alternierend, insbesondere alternierend und periodisch, anzusteuern.

Die Steuereinheit 2 ist also dazu eingerichtet, auf der Basis der zugeführten Signale Sg und Sg' den ersten Schalter S1 und den zweiten Schalter S2 alternierend, insbesondere alternierend und periodisch, anzusteuern.

Die Steuereinheit 2 kann dazu eingerichtet sein, den Zeitpunkt des Aus- und/oder Einschaltens des ersten Schalters S1 auf Grundlage der der Steuereinheit 2 zugeführten Signale Sg und Sg' einzustellen.

Insbesondere kann die Steuereinheit 2 dazu eingerichtet sein, den Zeitpunkt des Aus- und/oder Einschaltens des ersten Schalters S1 auf Grundlage des auf der Basis der zugeführten Signale Sg und Sg' ermittelten tatsächlichen zeitlichen Mittelwertes des Schalterstroms I_{S1} einzustellen.

Der Ausschaltzeitpunkt des ersten Schalters S1 kann auch mittelbar durch Einstellen einer Einschaltzeitdauer relativ zum Einschaltzeitpunkt des ersten Schalters S1 festgelegt werden.

Bei einer alternierenden Ansteuerung des ersten und zweiten Schalters ergibt sich dann über den Zeitpunkt des Aus- und/oder Einschaltens des ersten Schalters S1 der Zeitpunkt des Ein- und/oder Ausschaltens des zweiten Schalters S2.

Alternativ oder zusätzlich kann die Steuereinheit 2 dazu eingerichtet sein, den Zeitpunkt des Aus- und/oder Einschaltens des zweiten Schalters S2 auf Grundlage der der Steuereinheit 2 zugeführten Signale Sg und Sg' einzustellen.

Insbesondere kann die Steuereinheit 2 alternativ oder zusätzlich dazu eingerichtet sein, den Zeitpunkt des Aus- und/oder Einschaltens des zweiten Schalters S2 auf Grundlage des auf der Basis der zugeführten Signale Sg und Sg' ermittelten tatsächlichen zeitlichen Mittelwertes des Schalterstroms I_{S1} einzustellen.

Für eine Regelung der von der synchronen Sperrwandlerschaltung 1 ausgangsseitig bereitgestellten elektrischen Energie bzw. des von der synchronen Sperrwandlerschaltung 1 ausgangsseitig bereitgestellten Stroms I_{S2} zum Betrieb der ausgangsseitig angeschlossenen Leuchtmittelstrecke 4 kann die Steuereinheit 2 dazu eingerichtet sein, den Zeitpunkt des Aus- und/oder Einschaltens des ersten Schalters S1 und/oder den Zeitpunkt des Aus- und/oder Einschaltens des zweiten Schalters S2 auf Grundlage einer Abweichung des ermittelten tatsächlichen zeitlichen Mittelwerts des durch den ersten Schalter S1 fließenden Schalterstroms I_{S1} von einem vorgegebenen Wert einzustellen.

Die Steuereinheit 2 kann also dazu eingerichtet sein, den Zeitpunkt des Aus- und/oder Einschaltens des ersten Schalters S1 und/oder den Zeitpunkt des Aus- und/oder Einschaltens des zweiten Schalters S2 auf Grundlage einer Abweichung der Kombination aus dem ermittelten zeitlichen Mittelwert des positiven Anteils des durch den ersten Schalter S1 fließenden Schalterstroms I_{S1} und dem ermittelten zeitlichen Mittelwert des negativen Anteils des Schalterstroms I_{S1} von einem vorgegebenen Wert einzustellen.

Je nach Höhe der bestimmten Abweichung kann der Zeitpunkt des Ausschaltens des ersten Schalters S1 mehr oder weniger verzögert bzw. der Zeitpunkt des Einschaltens des ersten Schalters S1 vorgezogen werden, um beispielsweise eine zu niedrige ausgangsseitig bereitgestellte elektrische Energie bzw. einen zu niedrigen bereitgestellten Strom I_{S2} zu korrigieren.

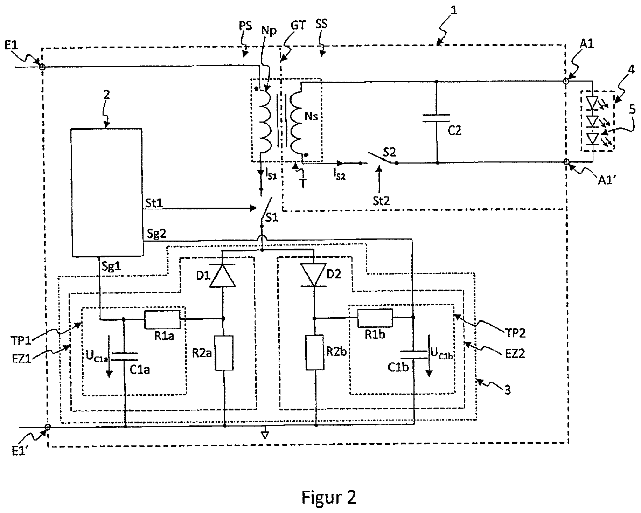

**Figur** 2 zeigt beispielhaft einen schematischen Schaltplan der Ausführungsform der erfindungsgemäßen synchronen Sperrwandlerschaltung.

Die in der Figur 2 gezeigte Ausführungsform der erfindungsgemäßen synchronen Sperrwandlerschaltung unterscheidet sich von dem in der Figur 1 gezeigten Beispiel der nicht erfindungsgemäßen synchronen Sperrwandlerschaltung insbesondere hinsichtlich der Erfassungsschaltung 3. Die vorstehenden Ausführungen zur synchronen Sperrwandlerschaltung der Figur 1 sind für die synchrone Sperrwandlerschaltung der Figur 2 entsprechend zutreffend. Im nachfolgenden werden im Wesentlichen die Unterschiede zwischen der synchronen Sperrwandlerschaltung der Figur 1 und der synchronen Sperrwandlerschaltung der Figur 2 erläutert.

Die Erfassungsschaltung 3 der synchronen Sperrwandlerschaltung 1 der Figur 2 weist zwei Erfassungszweige EZ1 und EZ2 auf, die jeweils mit dem ersten Schalter S1 elektrisch verbunden sind.

Der erste Erfassungszweig EZ1 umfasst eine erste Diode D1, eine erste Messeinheit R2a in Form eines ersten niederohmigen Messwiderstands und einen ersten Tiefpassfilter TP1. Der zweite Erfassungszweig EZ2 umfasst eine zweite Diode D2, eine zweite Messeinheit R2b in Form eines zweiten niederohmigen Messwiderstands und einen zweiten Tiefpassfilter TP2.

Der erste Erfassungszweig EZ1 und der zweite Erfassungszweig EZ2 sind vorzugsweise bis auf die Anordnung der ersten Diode D1 und zweiten Diode D2 identisch.

Die Kathode der ersten Diode D1 ist mit dem ersten Schalter S1 derart elektrisch verbunden, dass nur der negative Anteil des durch den ersten Schalter S1 fließenden Schalterstroms I_{S1} durch den ersten Erfassungszweig EZ1 fließen kann. Die Anode der zweiten Diode D2 ist mit dem ersten Schalter S1 derart elektrisch verbunden, dass nur der positive Anteil des durch den ersten Schalter S1 fließenden Schalterstroms I_{S1} durch den zweiten Erfassungszweig EZ2 fließen kann.

Die Kathode der ersten Diode D1, der nicht mit der Primärwicklung Np elektrisch verbundene Anschluss des ersten Schalter S1 und die Anode der zweiten Diode D2 sind mit demselben Knoten elektrisch verbunden.

Der erste Erfassungszweig EZ1 der Erfassungsschaltung 3 umfasst die erste Messeinheit R2a in Form eines niederohmigen Messwiderstands bzw. Shuntwiderstands zur Messung des negativen Anteils des durch den ersten Schalter S1 fließenden Schalterstroms I_{S1} und einen ersten Tiefpassfilter TP1 zur Integration des über die erste Messeinheit R2a gemessenen negativen Anteils des Schalterstroms I_{S1}. Folglich ist der erste Erfassungszweig EZ1 der Erfassungsschaltung 3 dazu eingerichtet, den zeitlichen Mittelwert des negativen Anteils des Schalterstroms I_{S1} zu erfassen und ein diesen zeitlichen Mittelwert wiedergebendes erstes Signal Sg1 der Steuereinheit 2 zuzuführen.

Die erste Messeinheit R2a ist mit der Anode der ersten Diode D1 derart in Reihe elektrisch verbunden, dass die an der ersten Messeinheit R2a abfallende Spannung proportional zum negativen Anteil des Schalterstroms I_{S1} ist.

Der erste Tiefpassfilter TP1 ist mit der ersten Messeinheit R2a derart elektrisch verbunden, dass die an der ersten Messeinheit R2a abfallende Spannung, die ein Maß für den negativen Anteil des Schalterstroms I_{S1} ist bzw. den negativen Anteil des Schalterstroms I_{S1} wiedergibt, dem ersten Tiefpassfilter TP1 zugeführt und folglich durch diesen gefiltert wird.

Der erste Tiefpassfilter TP1 umfasst einen ersten Kondensator C1a und einen ersten Widerstand R1a, wobei der erste Widerstand R1a an dem ersten Messwiderstand R2a und der erste Kondensator C1a an Masse angeschlossen ist. Der erste Kondensator C1a wird über den ersten Widerstand R1a von dem negativen Anteil des durch den ersten Schalter S1 fließenden Schalterstroms I_{S1} geladen. Das den zeitlichen Mittelwert des negativen Anteils des Schalterstroms I_{S1} wiedergebende erste Signal Sg1 ist eine von dem ersten Kondensator C1a abgegebene Spannung U_{C1a}.

Der zweite Erfassungszweig EZ2 der Erfassungsschaltung 3 umfasst die zweite Messeinheit R2b in Form eines niederohmigen Messwiderstands bzw. Shuntwiderstands zur Messung des positiven Anteils des durch den ersten Schalter S1 fließenden Schalterstroms I_{S1} und einen zweite Tiefpassfilter TP2 zur Integration des über die zweite Messeinheit R2b gemessenen positiven Anteils des Schalterstroms I_{S1}. Folglich ist der zweite Erfassungszweig EZ2 der Erfassungsschaltung 3 dazu eingerichtet, den zeitlichen Mittelwert des positiven Anteils des Schalterstroms I_{S1} zu erfassen und ein diesen zeitlichen Mittelwert wiedergebendes zweites Signal Sg2 der Steuereinheit 2 zuzuführen.

Die zweite Messeinheit R2b ist mit der Kathode der zweite Diode D2 derart in Reihe elektrisch verbunden, dass die an der zweiten Messeinheit R2b abfallende Spannung proportional zum positiven Anteil des Schalterstroms I_{S1} ist.

Der zweite Tiefpassfilter TP2 ist mit der zweite Messeinheit R2b derart elektrisch verbunden, dass die an der zweiten Messeinheit R2b abfallende Spannung, die ein Maß für den positiven Anteil des Schalterstroms I_{S1} ist bzw. den positiven Anteil des Schalterstroms I_{S1} wiedergibt, dem zweite Tiefpassfilter TP2 zugeführt und folglich durch diesen gefiltert wird.

Der zweite Tiefpassfilter TP2 umfasst einen zweite Kondensator C1b und einen zweite Widerstand R1b, wobei der zweite Widerstand R1b an dem zweiten Messwiderstand R2b und der zweite Kondensator C1b an Masse angeschlossen ist. Der zweite Kondensator C1b wird über den zweiten Widerstand R1b von dem positiven Anteil des durch den ersten Schalter S1 fließenden Schalterstroms I_{S1} geladen. Das den zeitlichen Mittelwert des positiven Anteils des Schalterstroms I_{S1} wiedergebende zweite Signal Sg2 ist eine von dem zweiten Kondensator C1b abgegebene Spannung U_{C1b}.

Der Steuereinheit 2 wird von dem ersten Erfassungszweig EZ1 der Erfassungsschaltung 3 ein erstes Signal Sg1 zugeführt, das den zeitlichen Mittelwert des negativen Anteils des durch den ersten Schalter S1 fließenden Schalterstroms I_{S1} wiedergibt. Der Steuereinheit 2 wird ferner von dem zweiten Erfassungszweig EZ2 der Erfassungsschaltung 3 ein zweites Signal Sg2 zugeführt, das den zeitlichen Mittelwert des positiven Anteils des durch den ersten Schalter S1 fließenden Schalterstroms I_{S1} wiedergibt Die Steuereinheit kann das erste Signal Sg1 und das zweite Signal Sg2 digital oder analog auswerten.

Die Steuereinheit 2 ist dann dazu eingerichtet, den tatsächlichen zeitlichen Mittelwert des durch den Schalter S1 fließenden Schalterstroms I_{S1} durch eine Kombination des zeitlichen Mittelwerts des positiven Anteils des Schalterstroms I_{S1} und des zeitlichen Mittelwerts des negativen Anteils des Schalterstroms I_{S1} zu ermitteln, insbesondere zu bestimmen.

Die primärseitige Steuereinheit 2 der Ausführungsform der erfindungsgemäßen synchronen Sperrwandlerschaltung ist insbesondere dazu eingerichtet, den ersten Schalter S1 und den zweiten Schalter S2 gemäß den vorstehenden Ausführungen zur Ausführungsform der erfindungsgemäßen synchronen Sperrwandlerschaltung zu steuern.

Folglich ist die Steuereinheit 2 dazu eingerichtet, die synchrone Sperrwandlerschaltung 1, insbesondere den ersten Schalter S1 und den zweiten Schalter S2, im vorstehend beschriebenen synchronen Betriebsmodus zu betreiben.

Hierbei ist die Steuereinheit 2 vorzugsweise dazu eingerichtet, den ersten Schalter S1 und zweiten Schalter S2 alternierend im leitenden Zustand zu betreiben. Insbesondere ist die Steuereinheit 2 dazu eingerichtet, den ersten Schalter S1 und zweiten Schalter S2 alternierend und periodisch im leitenden Zustand zu betreiben. Diesbezüglich wird auf die Figur 3 verwiesen, die ein Beispiel für den zeitlichen Verlauf des Steuersignals St1 zur Ansteuerung des ersten Schalters S1 und den zeitlichen Verlauf des Steuersignals St2 zur Ansteuerung des zweiten Schalters S2 bei einem Betrieb der synchronen Sperrwandlerschaltung 1 im synchronen Betriebsmodus gibt.

Die Steuereinheit 2 ist durch eine alternierende, insbesondere alternierende und periodische, Taktung des ersten Schalters S1 und zweiten Schalters S2, d.h. durch alternierendes, insbesondere alternierendes und periodisches, Ein- und Ausschalten des ersten Schalters S1 und zweiten Schalters S2, und dem dadurch verursachten Laden und Entladen des Transformators T dazu eingerichtet, ausgehend von einer am Eingang E1, E1' der synchronen Sperrwandlerschaltung 1 anschließbaren elektrischen Energiequelle eine am Ausgang A1, A1' der synchronen Sperrwandlerschaltung bereitgestellte elektrische Energie, Strom und/oder Spannung einzustellen.

Die Steuereinheit 2 ist ferner dazu eingerichtet, auf der Basis des ermittelten tatsächlichen zeitlichen Mittelwertes des Schalterstroms I_{S1} den ersten Schalter S1 und den zweiten Schalter S2 alternierend, insbesondere alternierend und periodisch, anzusteuern.

Die Steuereinheit 2 ist also dazu eingerichtet, auf der Basis des der Steuereinheit 2 zugeführten ersten Signals Sg1 und zweiten Signals Sg2 den ersten Schalter S1 und den zweiten Schalter S2 alternierend, insbesondere alternierend und periodisch, anzusteuern.

Die Steuereinheit 2 kann dazu eingerichtet sein, den Zeitpunkt des Aus- und/oder Einschaltens des ersten Schalters S1 auf Grundlage des der Steuereinheit 2 zugeführten ersten Signals Sg1 und zweiten Signals Sg2 einzustellen.

Insbesondere kann die Steuereinheit 2 dazu eingerichtet sein, den Zeitpunkt des Aus- und/oder Einschaltens des ersten Schalters S1 auf Grundlage des auf der Basis des zugeführten ersten Signals Sg1 und zweiten Signals Sg2 ermittelten tatsächlichen zeitlichen Mittelwertes des Schalterstroms I_{S1} einzustellen.

Der Ausschaltzeitpunkt des ersten Schalters S1 kann auch mittelbar durch Einstellen einer Einschaltzeitdauer relativ zum Einschaltzeitpunkt des ersten Schalters S1 festgelegt werden.

Bei einer alternierenden Ansteuerung des ersten und zweiten Schalters ergibt sich dann über den Zeitpunkt des Aus- und/oder Einschaltens des ersten Schalters S1 der Zeitpunkt des Ein- und/oder Ausschaltens des zweiten Schalters S2.

Alternativ oder zusätzlich kann die Steuereinheit 2 dazu eingerichtet sein, den Zeitpunkt des Aus- und/oder Einschaltens des zweiten Schalters S2 auf Grundlage des der Steuereinheit 2 zugeführten ersten Signals Sg1 und zweiten Signals Sg2 einzustellen.

Insbesondere kann die Steuereinheit 2 alternativ oder zusätzlich dazu eingerichtet sein, den Zeitpunkt des Aus- und/oder Einschaltens des zweiten Schalters S2 auf Grundlage des auf der Basis des zugeführten ersten Signals Sg1 und zweiten Signals Sg2 ermittelten tatsächlichen zeitlichen Mittelwertes des Schalterstroms I_{S1} einzustellen.

Für eine Regelung der von der synchronen Sperrwandlerschaltung 1 ausgangsseitig bereitgestellten elektrischen Energie bzw. des von der synchronen Sperrwandlerschaltung 1 ausgangsseitig bereitgestellten Stroms zum Betrieb der ausgangsseitig angeschlossenen Leuchtmittelstrecke 4 kann die Steuereinheit 2 dazu eingerichtet sein, den Zeitpunkt des Aus- und/oder Einschaltens des ersten Schalters S1 und/oder den Zeitpunkt des Aus- und/oder Einschaltens des zweiten Schalters S2 auf Grundlage einer Abweichung des ermittelten tatsächlichen zeitlichen Mittelwerts des durch den ersten Schalter S1 fließenden Schalterstroms I_{S1} von einem vorgegebenen Wert einzustellen.

Die Steuereinheit 2 kann also dazu eingerichtet sein, den Zeitpunkt des Aus- und/oder Einschaltens des ersten Schalters S1 und/oder den Zeitpunkt des Aus- und/oder Einschaltens des zweiten Schalters S2 auf Grundlage einer Abweichung der Kombination aus dem erfassten zeitlichen Mittelwert des positiven Anteils des durch den ersten Schalter S1 fließenden Schalterstromstroms I_{S1} und dem erfassten zeitlichen Mittelwert des negativen Anteils des Schalterstroms I_{S1} von einem vorgegebenen Wert einzustellen.

Je nach Höhe der bestimmten Abweichung kann der Zeitpunkt des Ausschaltens des ersten Schalters S1 mehr oder weniger verzögert bzw. der Zeitpunkt des Einschaltens des ersten Schalters S1 vorgezogen werden, um beispielsweise eine zu niedrige ausgangsseitig bereitgestellte elektrische Energie bzw. einen zu niedrigen bereitgestellten Strom I_{S2} zu korrigieren.

**Figur** 3 zeigt schematisch ein Beispiel für die Ansteuerung des ersten und zweiten Schalters des Beispiels der nicht erfindungsgemäßen Sperrwandlerschaltung oder der Ausführungsform der erfindungsgemäßen Sperrwandlerschaltung im synchronen Betriebsmodus und die dadurch resultierenden zeitlichen Verläufe des durch den ersten Schalter fließenden Schalterstroms und des durch den zweiten Schalter fließenden Stroms.

Wie aus der Figur 3 ersichtlich, werden der erste Schalter S1, dem das Steuersignal St1 ausgehend von der Steuereinheit 2 zugeführt wird, und der zweite Schalter S2, dem das Steuersignal St2 ausgehend von der Steuereinheit 2 zugeführt wird, durch die Steuereinheit 2 alternierend und periodisch angesteuert. Das heißt, während der erste Schalter S1 durch das entsprechende Steuersignal St1 mit einem hohen Pegel eingeschaltet bzw. leitend geschaltet ist (Einschaltzeitdauer Tion des ersten Schalters S1) ist der zweite Schalter S2 durch das entsprechende Steuersignal St2 mit einem niedrigen Pegel ausgeschaltet bzw. nicht leitend geschaltet (Ausschaltzeitdauer T2off des zweiten Schalters S2). Während der zweite Schalter S2 durch das entsprechende Steuersignal St2 mit einem hohen Pegel eingeschaltet bzw. leitend geschaltet ist (Einschaltzeitdauer T2on des zweiten Schalters S2) ist der erste Schalter S1 durch das entsprechende Steuersignal St1 mit einem niedrigen Pegel ausgeschaltet bzw. nicht leitend geschaltet (Ausschaltzeitdauer Tioff des ersten Schalters S1).

Die Pegel des ersten Steuersignals St1 und zweiten Steuersignals St2 zum Ein- und Ausschalten des ersten Schalters S1 und zweiten Schalters S2 können auch komplementär zu dem in Figur 3 gezeigten Beispiel sein.

Beim Betrieb des ersten Schalters S1 und zweiten Schalters S2 im synchronen Betriebsmodus ist die Einschaltzeitdauer T2on des zweiten Schalters S2 derart gewählt, dass während der Einschaltzeitdauer T2on des zweiten Schalters S2 die Polarität des durch den zweiten Schalter S2 fließenden Stroms I_{S2}von einer positiven Polarität auf eine negative Polarität wechselt. Folglich weist während der nachfolgenden Einschaltzeitdauer Tion des ersten Schalters S1 der durch den ersten Schalter S1 fließende Schalterstrom I_{S1} einen negativen Anteil und einen positiven Anteil auf.

Insbesondere fließt während der Einschaltzeitdauer Tion des ersten Schalters S1 zuerst ein negativer Schalterstrom I_{S1} gefolgt von einem positiven Schalterstrom I_{S1}. Ein negativer Strom entspricht bezüglich einem positiven Strom insbesondere einem Stromrückfluss. Der Zeitpunkt des Wechsels der Polarität des Schalterstroms I_{S1} von einer negativen Polarität (negativer Strom) zu einer positiven Polarität (positiver Strom) entspricht dem Zeitpunkt T_{ND} des Nulldurchgangs des Schalterstroms I_{S1}.

Bei der alternierenden und periodischen Ansteuerung des ersten Schalters S1 und des zweiten Schalter S2 wird während der Periode bzw. Periodenzeitdauer Tp der erste Schalter S1 zuerst für eine Einschaltzeitdauer Tion eingeschaltet und anschließend für eine Ausschaltzeitdauer Tioff wieder ausgeschaltet, während der zweite Schalter S2 komplementär angesteuert wird. Folglich wird der zweite Schalter S2 während der Einschaltzeitdauer Tion des ersten Schalters S1 ausgeschaltet und während der Ausschaltzeitdauer Tioff des ersten Schalters S1 wieder eingeschaltet.

Die Periode Tp kann auch anders gewählt sein (in Figur 3 nicht gezeigt), sodass während der Periode Tp der erste Schalter S1 zuerst für eine Ausschaltzeitdauer Tioff ausgeschaltet und anschließend für eine Einschaltzeitdauer Tion wieder eingeschaltet wird, während der zweite Schalter S2 komplementär angesteuert wird. Folglich wird der zweite Schalter S2 während der Ausschaltzeitdauer Tioff des ersten Schalters S1 eingeschaltet und während der Einschaltzeitdauer Tion des ersten Schalters S1 wieder ausgeschaltet.

Die Figur 3 zeigt die zeitlichen Verläufe der Steuersignale St1 und St2 für die Ansteuerung des ersten Schalters S1 und zweiten Schalter S2 im synchronen Betriebsmodus sowie den aus der Ansteuerung resultierenden durch den eingeschalteten bzw. leitenden ersten Schalter S1 fließenden Schalterstrom I_{S1} und durch den eingeschalteten bzw. leitenden zweiten Schalter S2 fließenden Strom I_{S2}lediglich schematisch, insbesondere ohne die Berücksichtigung von parasitären Effekten.

Ferner zeigt die Figur 3 lediglich einen Ausschnitt der zeitlichen Verläufe der Steuersignale St1 und St2 sowie der Ströme I_{S1} und I_{S2}während dem Betrieb der synchronen Sperrwandlerschaltung im synchronen Betriebsmodus. Das erstmalige Einschalten des ersten Schalters S1 und zweiten Schalters S2 aus einem Nichtbetrieb der synchronen Sperrwandlerschaltung wird in Figur 3 nicht gezeigt. Bei einem erstmaligen Einschalten würde nämlich der Schalterstrom I_{S1} keinen negativen Anteil aufweisen. Dieser entsteht erst dadurch, dass die Einschaltzeitdauer T2on des zweiten Schalters S2 derart lange gewählt ist, dass die Polarität des durch den zweiten Schalter S2 fließenden Stroms I_{S2}von einer positiven Polarität zu einer negativen Polarität wechselt. Der sekundärseitige Strom Is2 mit einer negativen Polarität bzw. der negative sekundärseitige Strom I_{S2} entspricht hierbei insbesondere einem Stromrückfluss.

Durch den synchronen Betriebsmodus kann ein sehr kleiner zeitlicher Mittelwert des sekundärseitigen Stroms I_{S2}, der während der Einschaltzeitdauer T2on des zweiten Schalters S2 durch den zweiten Schalter S2 fließt, und folglich auch ein sehr kleiner zeitlicher Mittelwert des primärseitigen Schalterstroms I_{S1} erreicht werden, der während der Einschaltzeitdauer Tion des ersten Schalter S1 durch den ersten Schalter S1 fließt.

Dies wird im untersten Graphen der Figur 3 schematisch gezeigt, der nur den zeitlichen Verlauf des primärseitigen Schalterstroms I_{S1} schematisch zeigt. Aufgrund des synchronen Betriebsmodus weist der Schalterstrom I_{S1} einen negativen Anteil und einen positiven Anteil auf. Der zeitliche Mittelwert Mt des Schalterstroms I_{S1} entspricht der Kombination des zeitlichen Mittelwertes Mn des negativen Anteils des Schalterstroms I_{S1} mit dem zeitlichen Mittelwert Mp des positiven Anteils des Schalterstroms I_{S1}.

Da der zeitliche Mittelwert Mt des Schalterstroms I_{S1} durch den synchronen Betriebsmodus sehr klein werden kann, würde eine direkt Erfassung dieses zeitlichen Mittelwertes Mt den tatsächlichen Mittelwert des Schalterstroms I_{S1} nicht wiedergeben oder nur dann wiedergeben, wenn hierfür eine teure und aufwendige Erfassungsschaltung verwendet werden würde. Andernfalls würde das bei der Erfassung auftretende Rauschen den direkt erfassten zeitlichen Mittelwert des Schalterstroms I_{S1} verfälschen.

Im Gegensatz zu dem sehr kleinen zeitlichen Mittelwert Mt des Schalterstroms I_{S1}, der im synchronen Betriebsmodus durch einen negativen Anteil des Schalterstroms I_{S1} erreicht werden kann, sind der zeitliche Mittelwert Mn des negativen Anteils des Schalterstroms I_{S1} und der zeitliche Mittelwert Mp des positiven Anteils des Schalterstroms I_{S1} groß und werden daher durch ein bei der Erfassung auftretendes Rauschen nicht verfälscht.

Folglich wird gemäß der Erfindung der zeitliche Mittelwert Mn des negativen Anteils des Schalterstroms I_{S1} und der zeitliche Mittelwert Mp des positiven Anteils des Schalterstroms I_{S1} separat ermittelt (nicht erfindungsgemäßes Beispiel) oder separat erfasst (Ausführungsform), um dann durch eine Kombination des zeitlichem Mittelwertes Mn des negativen Anteils des Schalterstroms I_{S1} und des zeitlichen Mittelwertes Mp des positiven Anteils des Schalterstroms I_{S1} den zeitlichen Mittelwert Mt des Schalterstroms I_{S1} zu ermitteln, insbesondere zu bestimmen. Da der derartig ermittelte zeitliche Mittelwert Mt des Schalterstroms I_{S1} durch ein Rauschen nicht verfälscht werden konnte und folglich dem tatsächlichen zeitlichen Mittelwert des Schalterstroms I_{S1} entspricht, wird dieser ermittelte zeitliche Mittelwert des Schalterstroms I_{S1} als tatsächlicher zeitlicher Mittelwert des Schalterstroms I_{S1} bezeichnet.

Wie aus Figur 3 ersichtlich, entspricht der zeitliche Mittelwert Mt des Schalterstroms I_{S1} insbesondere dem Schalterstrom I_{S1}, der während der Einschaltzeitdauer Tion des ersten Schalter S1 im zeitlichen Mittel durch den ersten Schalter S1 fließt. Somit entspricht der zeitliche Mittelwert Mt des Schalterstroms I_{S1} insbesondere dem Durchschnittstrom, der während der Einschaltzeitdauer Tion des ersten Schalters S1 durch den ersten Schalter S1 fließt.

## Patentansprüche

1. Synchrone Sperrwandlerschaltung (1) zum Betrieb einer Leuchtmittelstrecke (4) mit wenigstens einem Leuchtmittel (5), insbesondere mit wenigstens einer Leuchtdiode, wobei die synchrone Sperrwandlerschaltung (1) umfasst:
- einen Transformator (T) mit einer Primärwicklung (Np), welche mit einem ersten Schalter (S1) elektrisch verbunden ist, und einer Sekundärwicklung (Ns), welche über einen zweiten Schalter (S2) mit einem Ausgang (A1, A1') der synchronen Sperrwandlerschaltung (1) elektrisch verbunden ist, wobei die Leuchtmittelstrecke (4) an dem Ausgang (A1, A1') anschließbar ist,
- **gekennzeichnet durch** eine Steuereinheit (2), die zum Ansteuern des ersten Schalters (S1) und zum potentialgetrennten Ansteuern des zweiten Schalters (S2) eingerichtet ist, und
- eine Erfassungsschaltung (3);
- wobei der Transformator (T) eine Primärseite (PS) der synchronen Sperrwandlerschaltung (1), auf der die Primärwicklung (Np), der erste Schalter (S1), die Steuereinheit (2) und die Erfassungsschaltung (3) angeordnet sind, von einer Sekundärseite (SS) der synchronen Sperrwandlerschaltung (1) galvanisch trennt, auf der die Sekundärwicklung (Ns), der zweite Schalter (S2) und der Ausgang (A1, A1') angeordnet sind; und
- wobei die Erfassungsschaltung (3) dazu eingerichtet ist,
- einen zeitlichen Mittelwert (Mp) des positiven Anteils des durch den ersten Schalter (S1) fließenden Schalterstroms (I_{S1}) und einen zeitlichen Mittelwert (Mn) des negativen Anteils des durch den ersten Schalter (S1) fließenden Schalterstroms (I_{S1}) separat zu erfassen;
- ein den zeitlichen Mittelwert (Mn) des negativen Anteils des Schalterstroms (I_{S1}) wiedergebendes erstes Signal (Sg1) und ein den zeitlichen Mittelwert (Mp) des positiven Anteils des Schalterstroms (I_{S1}) wiedergebendes zweites Signal (Sg2) an die Steuereinheit (2) zuzuführen; und
- auf der Basis des der Steuereinheit (2) zugeführten ersten Signals (Sg1) und zweiten Signals (Sg2) den ersten Schalter (S1) und den zweiten Schalter (S2) alternierend anzusteuern.

2. Synchrone Sperrwandlerschaltung (1) gemäß Anspruch 1, wobei
- die Erfassungsschaltung (3) zwei Erfassungszweige (EZ1, EZ2) aufweist;
- ein erster Erfassungszweig (EZ1) der zwei Erfassungszweige (EZ1, EZ2) dazu eingerichtet ist, den zeitlichen Mittelwert des negativen Anteils des Schalterstroms (I_{S1}) zu erfassen und das diesen zeitlichen Mittelwert wiedergebende erste Signal (Sg1) an die Steuereinheit (2) zuzuführen; und
- ein zweiter Erfassungszweig (EZ2) der zwei Erfassungszweige (EZ1, EZ2) dazu eingerichtet ist, den zeitlichen Mittelwert des positiven Anteils des Schalterstroms (I_{S1}) zu erfassen und das diesen zeitlichen Mittelwert wiedergebende zweite Signal (Sg2) an die Steuereinheit (2) zuzuführen.

3. Synchrone Sperrwandlerschaltung (1) gemäß Anspruch 2, wobei
- der erste Erfassungszweig (EZ1) eine erste Diode (D1) aufweist, deren Kathode mit dem ersten Schalter (S1) derart elektrisch verbunden ist, dass nur der negative Anteil des durch den ersten Schalter (S1) fließenden Schalterstroms (I_{S1}) durch den ersten Erfassungszweig (EZ1) fließen kann; und
- der zweite Erfassungszweig (EZ2) eine zweite Diode (D2) aufweist, deren Anode mit dem Schalter (S1) derart elektrisch verbunden ist, dass nur der positive Anteil des durch den ersten Schalter (S1) fließenden Schalterstroms (I_{S1}) durch den zweiten Erfassungszweig (EZ2) fließen kann.

4. Synchrone Sperrwandlerschaltung (1) gemäß Anspruch 3, wobei
- der erste Erfassungszweig (EZ1) einen ersten Kondensator (C1a) aufweist, der mit der Anode der ersten Diode (D1) derart elektrisch verbunden ist, dass er von dem negativen Anteil des durch den ersten Schalter (S1) fließenden Schalterstroms (I_{S1}) geladen wird;
- der zweite Erfassungszweig (EZ2) einen zweiten Kondensator (C1b) aufweist, der mit der Kathode der zweiten Diode (D2) derart elektrisch verbunden ist, dass er von dem positiven Anteil des durch den ersten Schalter (S1) fließenden Schalterstroms (I_{S1}) geladen wird; und
- das erste Signal (Sg1) eine von dem ersten Kondensator (C1a) abgegebene Spannung (U_{C1a}) und das zweite Signal (Sg2) eine von dem zweiten Kondensator (C1b) abgegebene Spannung (U_{C1b}) ist.

5. Synchrone Sperrwandlerschaltung (1) gemäß Anspruch 4, wobei
- der erste Kondensator (C1a) Bestandteil eines ersten Tiefpassfilters (TP1) und der zweite Kondensator (C1b) Bestandteil eines zweiten Tiefpassfilters (TP2) ist.

6. Synchrone Sperrwandlerschaltung gemäß einem der Ansprüche 3 bis 5, wobei
- die erste Diode (D1) und die zweite Diode (D2) in demselben Gehäuse angeordnet sind.

7. Synchrone Sperrwandlerschaltung (1) gemäß einem der vorhergehenden Ansprüche, wobei
- die Steuereinheit (2) dazu eingerichtet ist, den ersten Schalter (S1) und zweiten Schalter (S2) derart alternierend einzuschalten, dass während der Einschaltzeitdauer (T2on) des zweiten Schalters (S2) die Polarität des durch den zweiten Schalter (S2) fließenden Stroms (I_{S2}) von einer positiven Polarität auf eine negative Polarität wechselt, sodass während der nachfolgenden Einschaltzeitdauer (Tion) des ersten Schalters (S1) der durch den ersten Schalter (S1) fließende Schalterstrom (I_{S1}) einen negativen Anteil und einen positiven Anteil aufweist.

8. Synchrone Sperrwandlerschaltung (1) gemäß einem der vorhergehenden Ansprüche, wobei
- die Steuereinheit (2) dazu eingerichtet ist, den tatsächlichen zeitlichen Mittelwert (Mt) des Schalterstroms (I_{S1}) durch eine Kombination des zeitlichen Mittelwertes (Mp) des positiven Anteils des Schalterstroms (I_{S1}) mit dem zeitlichen Mittelwert (Mn) des negativen Anteils des Schalterstroms (I_{S1}) zu ermitteln.

9. Leuchte, mit
- einer synchronen Sperrwandlerschaltung (1) gemäß einem der vorhergehenden Ansprüche, und
- einer Leuchtmittelstrecke (4) mit wenigstens einem Leuchtmittel (5), insbesondere mit wenigstens einer Leuchtdiode;
- wobei die synchrone Sperrwandlerschaltung (1) dazu eingerichtet ist, ausgehend von einer eingangsseitig zugeführten Eingangsspannung eine Ausgangsspannung zum Betrieb der Leuchtmittelstrecke (4) ausgangsseitig bereitzustellen.

10. Verfahren zum Betreiben einer synchronen Sperrwandlerschaltung (1) gemäß einem der Ansprüche 1 bis 7, wobei das Verfahren die folgenden Schritte umfasst:
- separates Erfassen, mit der Erfassungsschaltung (3), einen zeitlichen Mittelwert (Mp) des positiven Anteils des durch den ersten Schalter (S1) fließenden Schalterstroms (I_{S1}) und einen zeitlichen Mittelwert (Mn) des negativen Anteils des durch den ersten Schalter (S1) fließenden Schalterstroms (I_{S1});
- Zuführen, mit der Erfassungsschaltung (3), ein den zeitlichen Mittelwert (Mn) des negativen Anteils des Schalterstroms (I_{S1}) wiedergebendes erstes Signal (Sg1) und ein den zeitlichen Mittelwert (Mp) des positiven Anteils des Schalterstroms (I_{S1}) wiedergebendes zweites Signal (Sg2) an die Steuereinheit (2); und
- alternierendes Ansteuern des ersten Schalters (S1) und des potentialgetrennt anzusteuernden zweiten Schalters (S2) auf der Basis des der Steuereinheit (2) zugeführten ersten Signals (Sg1) und zweiten Signals (Sg2).

## Claims

1. Synchronous flyback converter circuit (1) for operating an illuminant line (4) with at least one illuminant (5), in particular with at least one light-emitting diode, wherein the synchronous flyback converter circuit (1) comprises:
- a transformer (T) having a primary winding (Np) which is electrically connected to a first switch (S1), and a secondary winding (Ns) which is electrically connected to an output (A1, A1') of the synchronous flyback converter circuit (1) via a second switch (S2), the illuminant line (4) being connectable to the output (A1, A1'),
**characterized by**
- a control unit (2) designed to actuate the first switch (S1) and to actuate the second switch (S2) with electrical isolation, and
- a detection circuit (3);
- wherein the transformer (T) galvanically isolates a primary side (PS) of the synchronous flyback converter circuit (1) on which the primary winding (Np), the first switch (S1), the control unit (2) and the detection circuit (3) are arranged, from a secondary side (SS) of the synchronous flyback converter circuit (1) on which the secondary winding (Ns), the second switch (S2) and the output (A1, A1') are arranged; and
- wherein the detection circuit (3) is designed to
- capture separately a temporal mean value of the positive component of the switch current (Iₛ₁) flowing through the first switch (S1) and a temporal mean value of the negative component of the switch current (Iₛ₁) flowing through the first switch (S1);
- feed to the control unit (2) a first signal (Sg1) representing the temporal mean value of the negative component of the switch current (Iₛ₁) and a second signal (Sg2) representing the temporal mean value of the positive component of the switch current (I_{S1}).
- alternatingly actuate the first switch (S1) and the second switch (S2) on the basis of the first signal (Sg1) and the second signal (Sg2) fed to the control unit (2).

2. Synchronous flyback converter circuit (1) according to Claim 1, wherein
- the detection circuit (3) has two detection branches (EZ1, EZ2);
- a first detection branch (EZ1) of the two detection branches (EZ1, EZ2) is designed to capture the temporal mean value of the negative component of the switch current (I_{S1}) and to feed the first signal (Sg1) representing this temporal mean value to the control unit (2); and
- a second detection branch (EZ2) of the two detection branches (EZ1, EZ2) is designed to capture the temporal mean value of the positive component of the switch current (I_{S1}) and to feed the second signal (Sg2) representing this temporal mean value to the control unit (2).

3. Synchronous flyback converter circuit (1) according to Claim 2, wherein
- the first detection branch (EZ1) has a first diode (D1), the cathode of which is electrically connected to the first switch (S1) in such a way that only the negative component of the switch current (I_{S1}) flowing through the first switch (S1) can flow through the first detection branch (EZ1); and
- the second detection branch (EZ2) has a second diode (D2), the anode of which is electrically connected to the switch (S1) in such a way that only the positive component of the switch current (I_{S1}) flowing through the first switch (S1) can flow through the second detection branch (EZ2).

4. Synchronous flyback converter circuit (1) according to Claim 3, wherein
- the first detection branch (EZ1) has a first capacitor (C1a) which is electrically connected to the anode of the first diode (D1) in such a way that it is charged by the negative component of the switch current (I_{S1}) flowing through the first switch (S1);
- the second detection branch (EZ2) has a second capacitor (C1b) which is electrically connected to the cathode of the second diode (D2) in such a way that it is charged by the positive component of the switch current (I_{S1}) flowing through the first switch (S1); and
- the first signal (Sg1) is a voltage (Ucia) output by the first capacitor (C1a), and the second signal (Sg2) is a voltage (U_{C1b}) output by the second capacitor (C1b).

5. Synchronous flyback converter circuit (1) according to Claim 4, wherein
- the first capacitor (C1a) is a component of a first low-pass filter (TP1) and the second capacitor (C1b) is a component of a second low-pass filter (TP2).

6. Synchronous flyback converter circuit according to any one of Claims 3 to 5, wherein
- the first diode (D1) and the second diode (D2) are arranged in the same housing.

7. Synchronous flyback converter circuit (1) according to any one of the preceding claims, wherein
- the control unit (2) is designed to switch on the first switch (S1) and second switch (S2) alternately such that, during the on duration (T2on) of the second switch (S2), the polarity of the current (I_{S2}) flowing through the second switch (S2) changes from a positive polarity to a negative polarity so that during the subsequent on duration (T1on) of the first switch (S1), the switch current (I_{S1}) flowing through the first switch (S1) has a negative component and a positive component.

8. Synchronous flyback converter circuit (1) according to any one of the preceding claims, wherein
- the control unit (2) is designed to determine the actual temporal mean value (Mt) of the switch current (I_{S1}) by combining the temporal mean value (Mp) of the positive component of the switch current (I_{S1}) with the temporal mean value (Mn) of the negative component of the switch current (I_{S1}).

9. Luminaire, with
- a synchronous flyback converter circuit (1) according to any one of the preceding claims, and
- an illuminant line (4) having at least one illuminant (5), in particular having at least one light-emitting diode;
- wherein the synchronous flyback converter circuit (1) is designed to provide on the output side an output voltage for operating the illuminant line (4), from an input voltage fed on the input side.

10. Method for operating a synchronous flyback converter circuit (1) according to any one of Claims 1 to 7, the method comprising the following steps:
- separately capturing, with the detection circuit (3), a temporal mean value of the positive component of the switch current (I_{S1}) flowing through the first switch (S1) and a temporal mean value of the negative component of the switch current (I_{S1}) flowing through the first switch (S1); and
- with the detection circuit (3), feeding to the control unit (2) a first signal (Sg1) representing the temporal mean value of the negative component of the switch current (I_{S1}) and a second signal (Sg2) representing the temporal mean value of the positive component of the switch current (I_{S1}).
- on the basis of the first signal (Sg1) and second signal (Sg2) fed to the control unit (2), alternatingly actuating the first switch (S1) and the second switch (S2) to be actuated with electrical isolation.

## Revendications

1. Circuit de convertisseur à récupération synchrone (1) pour faire fonctionner une section de moyens d'éclairage (4) comprenant au moins un moyen d'éclairage (5), en particulier comprenant au moins une diode électroluminescente, le circuit de convertisseur à récupération synchrone (1) comprenant :
- un transformateur (T) comprenant un enroulement primaire (Np), lequel est connecté électriquement à un premier interrupteur (S1), et un enroulement secondaire (Ns), lequel est connecté électriquement à travers un deuxième interrupteur (S2) à une sortie (A1, A1') du circuit de convertisseur à récupération synchrone (1), la section de moyens d'éclairage (4) pouvant être connectée à la sortie (A1, A1'),
- **caractérisé par**
- une unité de commande (2) qui est conçue pour la commande du premier interrupteur (S1) et pour la commande à séparation de potentiel du deuxième interrupteur (S2), et
- un circuit de détection (3) ;
- le transformateur (T) séparant galvaniquement une face principale (PS) du circuit de convertisseur à récupération synchrone (1), sur laquelle sont disposés l'enroulement principal (Np), le premier interrupteur (S1), l'unité de commande (2) et le circuit de détection (3), d'une face secondaire (SS) du circuit de convertisseur à récupération synchrone (1), sur laquelle sont disposés l'enroulement secondaire (Ns), le deuxième interrupteur (S2) et la sortie (A1, A1') ; et
- le circuit de détection (3) étant configuré pour
- détecter séparément une valeur moyenne temporelle (Mp) de la partie positive du courant de commutation (I_{S1}) traversant le premier interrupteur (S1) et une valeur moyenne temporelle (Mn) de la partie négative du courant de commutation (I_{S1}) traversant le premier interrupteur (S1) ;
- transmettre à l'unité de commande (2) un premier signal (Sg1) reproduisant la valeur moyenne temporelle (Mn) de la partie négative du courant de commutation (I_{S1}) et un deuxième signal (Sg2) reproduisant la valeur moyenne temporelle (Mp) de la partie positive du courant de commutation (I_{S1}) ; et
- commander en alternance le premier interrupteur (S1) et le deuxième interrupteur (S2) sur la base du premier signal (Sg1) et du deuxième signal (Sg2) transmis à l'unité de commande (2).

2. Circuit de convertisseur à récupération synchrone (1) selon la revendication 1, dans lequel
- le circuit de détection (3) présente deux branches de détection (EZ1, EZ2) ;
- une première branche de détection (EZ1) des deux branches de détection (EZ1, EZ2) est conçue pour détecter la valeur moyenne temporelle de la partie négative du courant de commutation (I_{S1}) et transmettre à l'unité de commande (2) le premier signal (Sg1) reproduisant cette valeur moyenne temporelle ; et
- une deuxième branche de détection (EZ2) des deux branches de détection (EZ1, EZ2) est conçue pour détecter la valeur moyenne temporelle de la partie positive du courant de commutation (I_{S1}) et transmettre à l'unité de commande (2) le deuxième signal (Sg2) reproduisant cette valeur moyenne temporelle.

3. Circuit de convertisseur à récupération synchrone (1) selon la revendication 2, dans lequel
- la première branche de détection (EZ1) présente une première diode (D1), dont la cathode est connectée électriquement au premier interrupteur (S1) de telle façon que seule la partie négative du courant de commutation (I_{S1}) traversant le premier interrupteur (S1) peut traverser la première branche de commutation (EZ1) ; et
- la deuxième branche de détection (EZ2) présente une deuxième diode (D2), dont l'anode est connectée électriquement au premier interrupteur (S1) de telle façon que seule la partie positive du courant de commutation (I_{S1}) traversant le premier interrupteur (S1) peut traverser la deuxième branche de commutation (EZ2).

4. Circuit de convertisseur à récupération synchrone (1) selon la revendication 3, dans lequel
- la première branche de détection (EZ1) présente un premier condensateur (C1a), qui est connecté électriquement à l'anode de la première diode (D1) de telle façon qu'il est chargé par la partie négative du courant de commutation (I_{S1}) traversant le premier interrupteur (S1) ;
- la deuxième branche de détection (EZ2) présente un deuxième condensateur (C1b), qui est connecté électriquement à la cathode de la deuxième diode (D2) de telle façon qu'il est chargé par la partie positive du courant de commutation (I_{S1}) traversant le premier interrupteur (S1) ; et
- le premier signal (Sg1) est une tension (U_{C1a}) fournie par le premier condensateur (C1a) et le deuxième signal (Sg2) est une tension (U_{C1b}) fournie par le deuxième condensateur (C1b).

5. Circuit de convertisseur à récupération synchrone (1) selon la revendication 4, dans lequel
- le premier condensateur (C1a) fait partie d'un premier filtre passe-bas (TP1) et le deuxième condensateur (C1b) fait partie d'un deuxième filtre passe-bas (TP2).

6. Circuit de convertisseur à récupération synchrone selon l'une quelconque des revendications 3 à 5, dans lequel
- la première diode (D1) et la deuxième diode (D2) sont disposées dans le même boîtier.

7. Circuit de convertisseur à récupération synchrone (1) selon l'une quelconque des revendications précédentes, dans lequel
- l'unité de commande (2) est conçue pour enclencher en alternance le premier interrupteur (S1) et le deuxième interrupteur (S2) de telle façon que, pendant la durée d'enclenchement (T2on) du deuxième interrupteur (S2), la polarité du courant (I_{S2}) traversant le deuxième interrupteur (S2) change d'une polarité positive à une polarité négative, de telle sorte que pendant la durée d'enclenchement (T1on) suivante du premier interrupteur (S1), le courant (I_{S1}) traversant le premier interrupteur (S1) présente une partie négative et une partie positive.

8. Circuit de convertisseur à récupération synchrone (1) selon l'une quelconque des revendications précédentes, dans lequel
- l'unité de commande (2) est conçue pour déterminer la valeur moyenne temporelle réelle (Mt) du courant de commutation (I_{S1}) par une combinaison de la valeur moyenne temporelle (Mp) de la partie positive du courant de commutation (I_{S1}) avec la valeur moyenne temporelle (Mn) de la partie négative du courant de commutation (I_{S1}).

9. Luminaire, comprenant
- un circuit de convertisseur à récupération synchrone (1) selon l'une quelconque des revendications précédentes, et
- une section de moyens d'éclairage (4) comprenant au moins un moyen d'éclairage (5), en particulier comprenant au moins une diode électroluminescente ;
- le circuit de convertisseur à récupération synchrone (1) étant conçu pour fournir côté sortie, à partir d'une tension d'entrée fournie côté entrée, une tension de sortie pour faire fonctionner la section de moyens d'éclairage (4).

10. Procédé pour faire fonctionner un circuit de convertisseur à récupération synchrone (1) selon l'une quelconque des revendications 1 à 7, le procédé comprenant les étapes suivantes :
- détection séparée, avec le circuit de détection (3), d'une valeur moyenne temporelle (Mp) de la partie positive du courant de commutation (I_{S1}) traversant le premier interrupteur (S1) et d'une valeur moyenne temporelle (Mn) de la partie négative du courant de commutation (I_{S1}) traversant le premier interrupteur (S1) ;
- transmission, avec le circuit de détection (3), à l'unité de commande (2) d'un premier signal (Sg1) reproduisant la valeur moyenne temporelle (Mn) de la partie négative du courant de commutation (I_{S1}) et d'un deuxième signal (Sg2) reproduisant la valeur moyenne temporelle (Mp) de la partie positive du courant de commutation (I_{S1}) ; et
- commande en alternance du premier interrupteur (S1) et du deuxième interrupteur (S2) devant être commandé avec séparation de potentiel, sur la base du premier signal (Sg1) et du deuxième signal (Sg2) fournis à l'unité de commande (2).
